Europäisches Patentamt

European Patent Office

Office européen des brevets

(19)

(11) EP 1 587 004 A1

(12) **EUROPEAN PATENT APPLICATION**

(43) Date of publication:
**19.10.2005 Bulletin 2005/42**

(51) Int Cl.⁷: **G06F 17/30**

(21) Application number: **05007058.0**

(22) Date of filing: **31.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **12.04.2004 US 822612**

(71) Applicant: **SAP AG**
**69190 Walldorf (DE)**

(72) Inventor: **Ronnewinkel, Christopher**
**69126 Heidelberg (DE)**

(74) Representative: **Müller-Boré & Partner**
**Patentanwälte**
**Grafinger Strasse 2**
**81671 München (DE)**

(54) **Automated suggestion of responses based on a categorization of messages**

(57) A system is disclosed to provide content analysis services. The system includes a classifier that provides one or more recommendations based on an incoming message. The classifier combines query-based classification and example-based classification to classify an incoming message. The system may include a user application that allows the classifier to process and respond to incoming messages.

FIG. 2A

**Description**

**TECHNICAL FIELD**

The disclosure relates to classifying information and to providing recommendations based on such classification.

**BACKGROUND**

The increased capability of computers to store vast amounts of on-line information has led to an increasing need for efficient data classification systems. Data classification systems are especially needed for natural language texts (e.g. articles, faxes, memos, electronic mail, etc.) where information may be unstructured and unassociated with other texts. The effect of this is that users are forced to sift through the increasing amount of on-line texts to locate relevant information. Users require that classification systems provide useful information under particular circumstances and distinguish useful information from other information.

An exemplary application in which vast amounts of data are classified is a customer call center, or more generally a contact center. In a contact center, an agent must respond to a high volume of incoming messages. To efficiently process those messages, contact centers can use software that provides auto-suggested responses to the agent to save the agent's time in preparing a response. In order to prepare a response, the content of the incoming message may first be analyzed to determine the nature of the message. Once the nature, or problem description, has been determined, an appropriate response can be prepared.

**SUMMARY**

A system is disclosed to provide content analysis services. The system includes a classifier that provides one or more recommendations based on an incoming message. The classifier uses query-based classification in combination with example-based classification to classify the content of an incoming message. The system may include a user application that allows an agent to classify, process, and respond to incoming messages.

In a contact center, for example, appropriately configured software can use the classification result to efficiently retrieve relevant data from a database and to automatically suggest responses to an agent. By automatically suggesting responses that are limited to responses that are likely to be incorporated into the response, the software can reduce the time and effort required for the agent to respond to incoming messages. As such, the agent's productivity can be enhanced, and contact center costs can be reduced, by software that incorporates query-based classification. Various aspects of the system relate to analyzing the content of incoming messages.

For example, in one aspect, a method of analyzing the content of an incoming message includes classifying the incoming message using query-based classification to select at least one category that relates to the content of the incoming message. The method also includes classifying the incoming message using an example-based classification algorithm to search through a set of stored previous messages to identify at least one stored previous message that relates to the content of the incoming message. Each stored previous message is associated with at least one of the selected categories.

In another aspect, a computer program product is tangibly embodied in an information carrier. The computer program product contains instructions that, when executed, cause a processor to perform operations to analyze the content of an incoming message according to the above-described method aspect.

In still another aspect, a computer-implemented system for responding to incoming messages includes a content analysis engine that uses query-based classification to select at least one category that relates to the content of the incoming message. The content analysis engine operates according to the above-described method aspect.

In various modifications, the foregoing aspects may include identifying at least one business object that is associated with the selected category. In that case, they may further include recommending the identified at least one business object. The aspects may include identifying at least one business object that is associated with the identified stored previous message. In that case, they may further include recommending the identified at least one business object.

Classifying the incoming message using query-based classification may include evaluating content of the incoming message using pre-defined queries. The predefined queries are associated with each of a plurality of pre-defined categories in a categorization scheme. Classifying would also then include selecting a category for which one of the pre-defined queries evaluates as true.

Classifying the incoming message using an example-based classification algorithm may include comparing the incoming message with the set of stored previous messages, and determining which stored previous messages in the set of stored previous messages are most similar to the incoming message.

The foregoing aspects may be modified to include identifying at least one business object that is associated with the selected category. In that case, it would also include identifying at least one business object that is associated with the identified stored previous message. In some examples, it would further include recommending business objects that are associated with both the selected category and the identified stored previous message. In other examples, it would further include recommending business objects that are associated with at least one of the selected category and the identified stored previous message.

The incoming message may be an email, or it may be received via Internet self-service. The foregoing aspects may also include providing a recommendation based on both the selected category and the identified at least one stored previous message. The example-based classification algorithm may be a k-nearest neighbor algorithm, or a support vector machine algorithm.

The foregoing aspects and modifications provide various features and advantages. For example, agent productivity can be increased because only the most relevant responses are automatically recommended to the agent. Accordingly, even though messages can be processed at a greater rate, the quality of the responses can be maintained or even improved. This results from the automatically suggested responses being analyzed using both query-based classification and example-based classification. The combination of these analysis techniques improves the quality of the suggested responses by filtering out irrelevant responses that either technique, by itself, would have suggested.

In a contact center with a large database of previously resolved problems, the identification process may be accelerated by pre-screening to limit the number of previously resolved problems that are evaluated. A large database may be prescreened to limit the number of previously resolved problems that are evaluated by first categorizing the problem description using query-based classification. Only those previously resolved problems that correspond to the same category as the problem description are evaluated. This may have the advantage of reducing cost and time associated with searching for customer solutions.

In some implementations, the method can provide significant computational advantages. For example, if the database of stored previous messages is very large, example-based classification can delay completion of the response, substantially burden the processing resources of the enterprise computing system at the expense of other processes, or both. By using query-based classification to narrow the number of previous examples considered during the example-based classification, the computational efficiency and speed of the classification process can be dramatically improved.

Other advantages result from the combination of both query-based and example-based classification in different ways to meet different objectives. For example, the results can be combined additively to broaden the number of suggested responses. Alternatively, the results can be combined exclusively to limit the suggested responses to those that are identified by both classification techniques. Additional features and advantages will be readily apparent from the following detailed description, the accompanying drawings, and the claims.

## DESCRIPTION OF DRAWINGS

Fig. 1 is a customer environment connected to an enterprise computing system over the Internet.

Fig. 2A is a system that uses content analysis to respond to incoming messages.

Fig. 2B is a flow chart of the content analysis method.

Fig. 3 is a categorization scheme.

Fig. 4 is a portion of the categorization scheme of Fig. 3 with additional detail.

Fig. 5 is a run-time flow chart of the steps performed when evaluating a categorization scheme.

Fig. 6 is a block diagram of an ERMS business process.

Figs. 7-9 are screen shots of an exemplary run-time graphical user interface (GUI) for an ERMS using the coherent categorization scheme of Fig. 3 in the run-time environment.

Fig. 10 is a design-time GUI for defining queries for the categorization scheme of Fig. 3.

Fig. 11 is a computer-based system for content analysis.

Fig. 12 is a maintainer user interface.

Fig. 13 is a display screen to process incoming messages.

Fig. 14 is a solution search display for responding to incoming messages.

Fig. 15 is a flow chart for the classification process implemented by the classifier.

Like reference symbols in the various drawings indicate like elements.

**DETAILED DESCRIPTION**

In general, content analysis is a step in the process of preparing a substantive response to an incoming message or request. If content analysis is automated using software, then agent productivity may be increased by auto-suggesting relevant solutions to the agent. Where the incoming message is classified based upon a content analysis, the auto-suggested solutions may be selected based on the classification. Accordingly, efficient and accurate content analysis of an incoming message is key to auto-suggesting relevant responses.

This document describes a method of content analysis that uses a combination of two algorithms. First, the content of the message is categorized using pre-defined queries associated with categories in a pre-defined categorization scheme. A category is selected if the pre-defined query associated with that category evaluates as "true." Second, the contents of the message are compared to a database of previous requests for information, and particularly to previous messages in that database that have an association with the selected category. A previous message that is similar to the incoming message is identified using an example-based algorithm, such as k-nearest neighbor, or support vector machine. The selected category and the identified previous message can then be used to provide suggested responses for responding to the incoming message.

For ease of understanding, content analysis software and methods will first be introduced in the context of a computing environment in which these methods may be executed. With this introduction, an overview of how content analysis may be applied is described in an exemplary system for responding to incoming e-mail messages. Then, the details of the two content analysis algorithms, namely query-based classification and example-based classification, are described in turn.

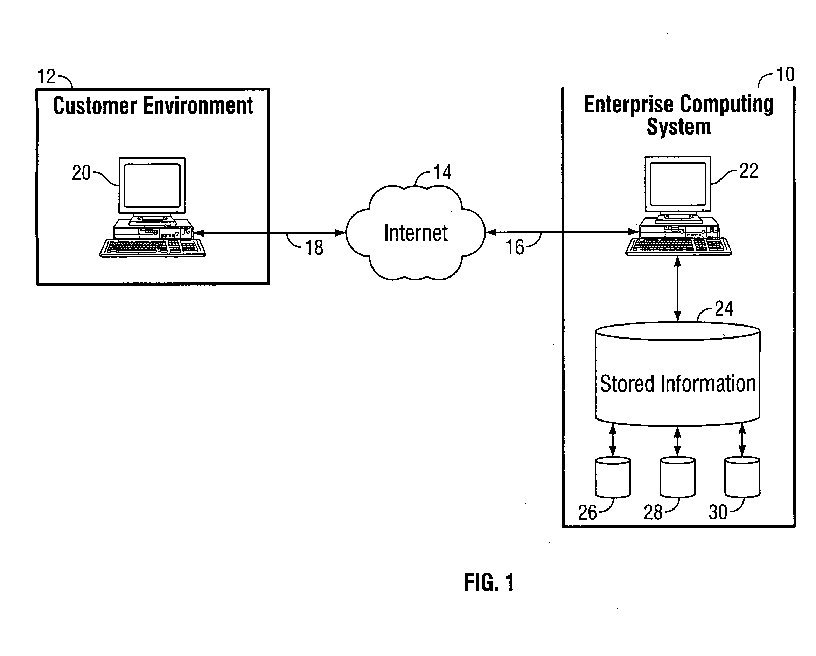

Beginning with the computing environment for content analysis, Fig. 1 shows an enterprise computing system 10 that communicates with a customer computing environment 12 over the Internet 14. The enterprise computing system 10 and the customer computing environment 12 use communication links 16 and 18, respectively, to send and receive messages over the Internet 14. The user in the customer environment 12 can access the Internet 14 using a terminal 20, and a user in the enterprise computing system 10 can access the Internet 14 using a terminal 22.

For example, the user in the customer environment 12 can send an email over the Internet 14 from the terminal 20, and the user in the enterprise computing system 10 can receive the email at the terminal 22. The enterprise computing system 10 includes software that, when executed, first analyzes the content of the incoming email, and then automates at least a portion of the process of generating a response to the incoming email. An agent who uses the terminal 22 to respond to the email can use this software, such as ERMS software, to efficiently generate a response. In this example, the ERMS includes program modules stored in the stored information repository 24 of the enterprise computing system 10.

The stored information repository 24 also includes various databases, such as, for example, a categorization scheme database 26, a previous messages database 28, and a stored information database 30. The categorization scheme database 26 contains predefined categorization schemes, each of which includes predefined categories. The previous messages database 28 contains information about messages that have been previously received. The stored information database 30 contains various types of stored information, referenced herein as business objects, which may be used to generate responses to incoming message from the customer.

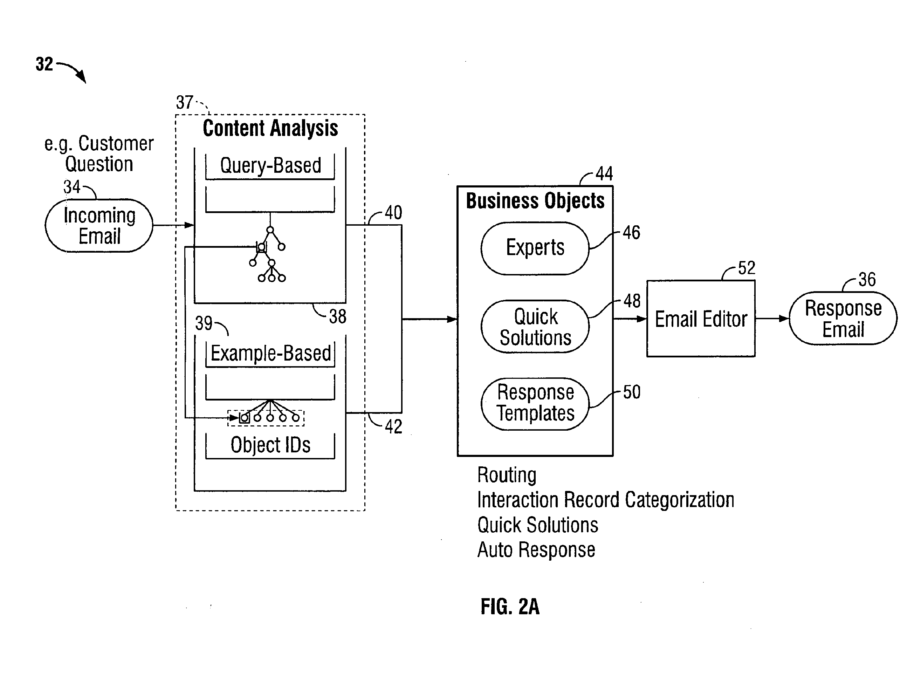

With that introduction to the computing environment, an overview of content analysis applied in an exemplary e-mail response management system (ERMS) will now be described. In Fig. 2A, an ERMS 32 receives an incoming e-mail 34 and provides a response e-mail 36. The incoming e-mail 34 may be, for example, from a customer in the customer environment 12, and a response e-mail may be generated by an agent in the enterprise computing system 10 (Fig. 1). To generate the response e-mail 44, the ERMS 32 first analyzes the textual content of the incoming e-mail 34 using content analysis engine 37. The content analysis engine 37 includes a query-based classification module 38 and an example-based classification module 39. The query-based classification module 38 has an output signal 40, and the example-based classification module 39 has an output signal 42. Output signals 40, 42 serve as inputs to the business object identification module 44. The business object identification module 44 includes business objects experts 46, quick solutions 48, and response templates 50. The business objects identified in the module 44 are used to generate the response e-mail 36, which generally involves the use of an e-mail editor process 52. After the identified business objects have been incorporated as necessary using the e-mail editor 52, the agent who is performing the ERMS business process sends the response e-mail 36 to the customer over the Internet 14.

The content analysis engine 37 classifies the text of the incoming e-mail 34 using both the query-based classification module 38 and the example-based classification module 39. The content analysis is performed in order to identify business objects that are relevant to generating the response e-mail 36. Accordingly, business objects that are stored in the stored information database 30 (Fig. 1) are linked to certain categories in predefined categorization schemes used by the query-based classification module 38. The categorization schemes used by the query-based classification module 38 may be stored in the categorization scheme database 26 (Fig. 1). In addition, business objects stored in the stored information database 30 are linked to previous examples used by the example-based module 39. Previous examples may be linked to categories or to certain business objects, wherein a business object's database key may be referred to herein as an "object ID." Via the object ID, a business object can be associated with previous examples. The previous examples may be stored in the previous messages database 28 (Fig. 1).

The query-based classification module 38 uses at least one categorization scheme to categorize the textual content of the incoming e-mail 34. However, more than one category may be selected if a query associated with more than one category evaluates as "true." The selected category in this example is linked to several example documents in the example-based classification module. Each example document (or previous example) that is stored in the previous messages database 28 is again linked to an object ID.

The content analysis engine 37 provides output signal 40, which includes the categories selected by the query-based classification module 38, and output signal 42, which includes object ID's identified by the example-based classification module 39. The selected categories of signal 40 are linked to business objects in the stored information database 30. The identified object ID's of signal 42 are associated with business objects in the stored information database 30.

The business object selection module 44 can combine the output signals 40, 42 to select relevant business objects for use in responding to the incoming e-mail 34. As such, the output signals 40, 42 can be combined in different ways to meet different objectives. For example, the results can be combined additively to broaden the number of suggested responses. In an additive combination, the business objects that are linked to the selected categories in the output signal 40 are combined with all of the business objects associated with the identified object ID's in the output signal 42. The resulting additive combination includes all business objects that are either linked to a selected category or associated with an identified object ID. As such, the number of business objects tends to be relatively large. Alternatively, the results can be combined exclusively to reduce the number of business objects selected by the business objects selection module 44. An exclusive combination includes only those business objects that are linked to the previous examples linked to the selected categories. This means the previous examples that are to be used to identify business objects during an example-based classification are filtered by the categories selected during a query-based classification. Using exclusive combinations, the number of business objects selected by the business object selection module 44 may be reduced.

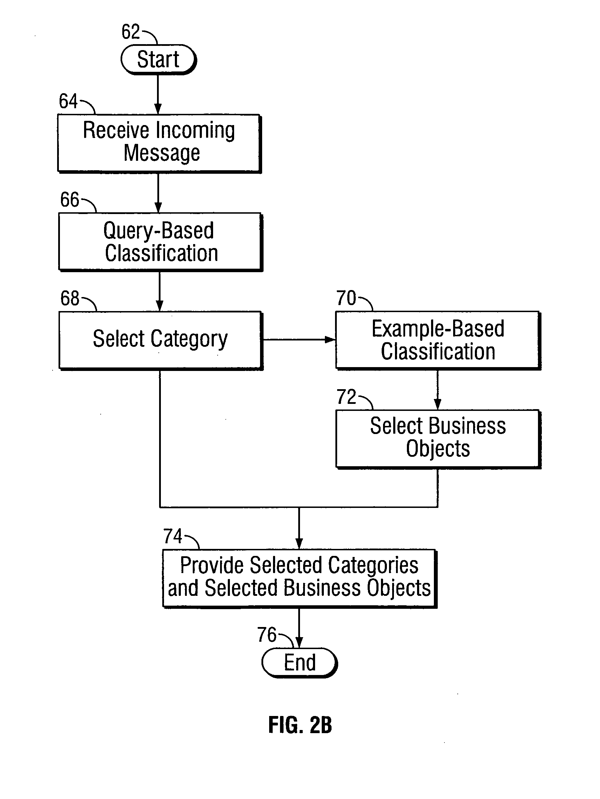

The content analysis engine 37 of Fig. 2A performs the steps illustrated in the flowchart of Fig. 2B. Beginning at 62, the content analysis engine 37 receives an incoming message at 64, such as incoming e-mail 34. The query-based classification module 38 performs a query-based classification at 66 on the content of the incoming e-mail 34. The classification selects several categories at 68. The example-based classification module 39 uses these categories selected at 68 to perform an example-based classification at 70. Accordingly, the example-based classification module selects several object IDs at 72 based upon the previous examples linked to the categories selected at 68. The categories selected at 68, along with the list of object IDs selected at 72, are provided at 74 to the business object selection module 44. The content analysis process is completed at 76.

With that overview of content analysis using the combination of query-based classification and example-based classification, the detailed operation of each of these two classification algorithms will next be described in turn.

**Query-Based Classification**

Turning first to the details of query-based classification, the following discussion describes the details of query-based classification so that the operation of the query-based classification module 38 of Fig. 2A can be understood. Query-based classification can most easily be described by introducing the structure of a categorization scheme. That introduction is followed by an application of categorization schemes in the context of a business application such as an ERMS. Finally, a design tool is presented, which tool may be used to create categorization schemes for performing query-based classification in the query-based classification module 38 (Fig. 2A).

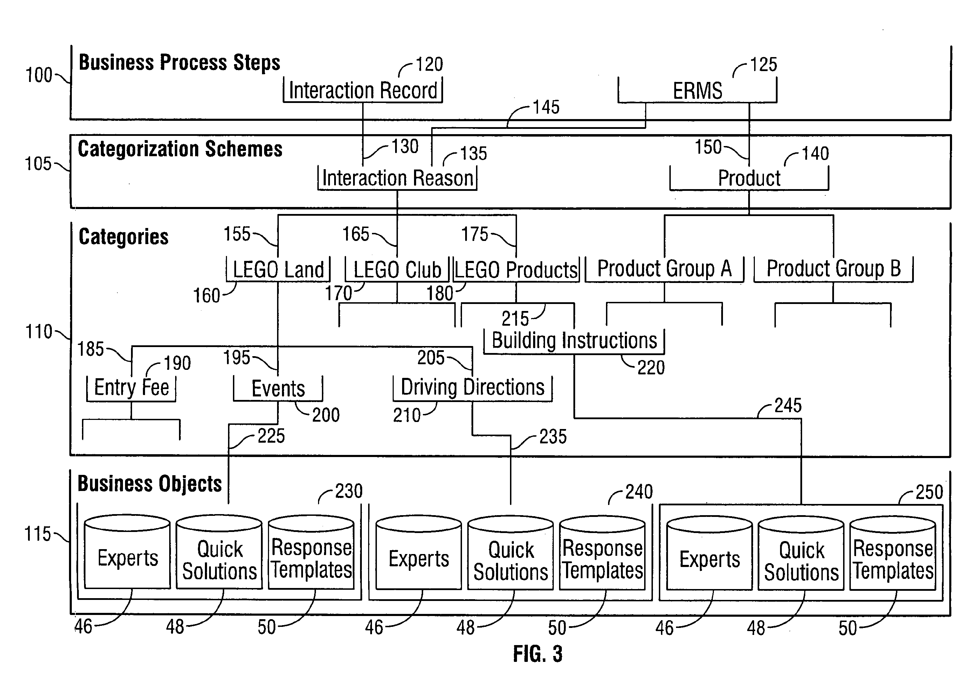

The selection of categories to perform the foregoing exemplary business process steps, namely content analysis, depends on the structural details of the categorization scheme itself. The structures of two exemplary categorization schemes that may be used in the query-based classification module 38 of Fig. 2A are illustrated in Figs. 3-4. In general, Figs. 3-4 illustrate how categorization schemes can be used to relate business process steps to relevant business objects, as well as how categorization schemes define relationships between categories.

Referring to Fig. 3, a set of business process steps 100 may be performed, either automatically or in response to user input, during the run-time execution of a business application. The steps in the set of business process steps 100 are linked to a set of categorization schemes 105. Each categorization scheme in the set of categorization schemes 105 is linked, directly or indirectly, to multiple categories 110. The categories may be distributed across any number of levels. For example, the categories may be arranged in a hierarchical structure having several levels, or they may be arranged in a flat structure in a single level. In hierarchically structured categories, each category below a top level is linked to one parent in the next higher level, and may be linked to any number of child categories in the next lower level. Parent/child categories may also be referred to as categories/sub-categories. Any of the categories 110 may be linked to one or more business objects 115.

Accordingly, the categorization schemes 105 relate business objects 115 to the business process steps 100. By defining these associations, categorization schemes reflect relationships between business processes and resources (i.e., business objects), especially stored information, in the enterprise computing system 10. Moreover, if a categorization scheme 105 identifies a selected category from among the categories 110 that subsequently provides relevant BO's 115 to more than one business process step 100, then that categorization scheme 105 may be referred to as a "coherent" categorization scheme. In a business application that includes coherent categorization, a single categorization may be used to provide business objects to multiple business application business process steps within the business application. As such, the categorization schemes 105 may reflect relationships across multiple business processes.

For example, Fig. 3 shows an interaction record business process step 120 and an ERMS business process step 125. The interaction record business process step 120 is linked by a link 130 to an interaction reason categorization scheme 135. The ERMS business process step 125 is linked by a link 145 to the interaction reason categorization scheme 135, and it is linked by a link 150 to the product categorization scheme 140. Each of the categorization schemes 125 and 140 are linked to a number of categories. The interaction reason categorization scheme 135 is shown as having a hierarchical structure, while the product categorization scheme 140 is shown as having a flat structure. Under the interaction reason categorization scheme 135, there is a link 155 to a LEGOLAND® category 160, a link 165 to a Lego® club category 170, and a link 175 to a Lego® products category 180. The categories 160, 180 have further subcategories. The LEGOLAND® category 160 has a link 185 to an entry fee category 190, a link 195 to an events category 200, and a link 205 to a driving directions category 210. Similarly, the Lego® products category 180 has a link 215 to a building instructions category 220. Other links and categories may be added or removed from the interaction reason categorization scheme 135 to provide different responses for the business process steps 120, 125.

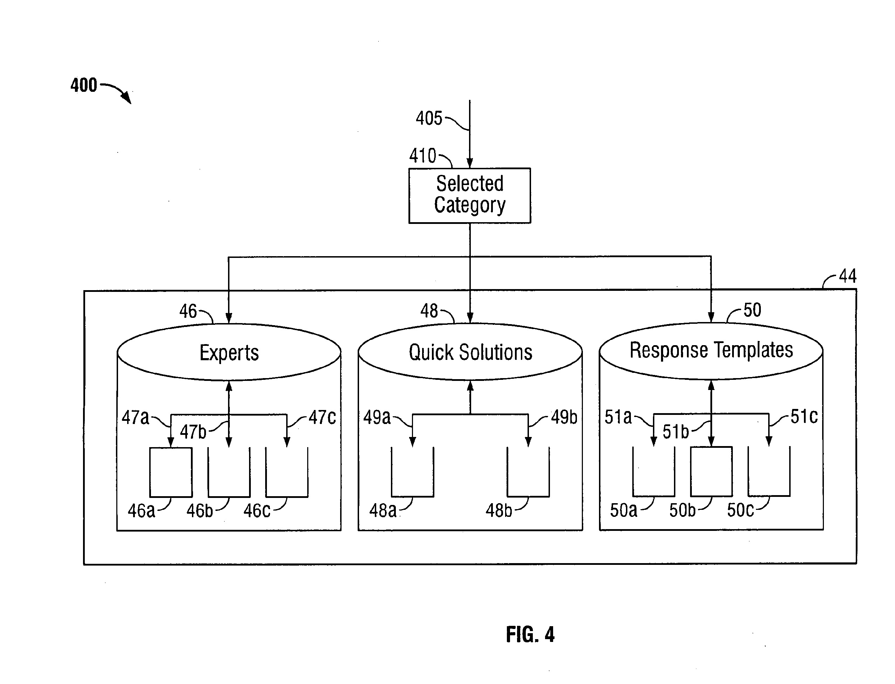

By way of example, each of the categories 200, 210 and 220 is linked to relevant business objects within the business objects 115. For example, the events category 200 has a link 225 to a set of business objects 230. As will be described with reference to Fig. 4, the link 225 represents a set of links, whereby each business object in the set of business objects 230 has a uniquely defined link between each business object in the events category 200. Similarly, the driving directions category 210 has a link 235 to a set of business objects 240, and the building instructions category 220 has a link 245 to a set of business objects 250. The sets of business objects 230, 240, 250 each include experts 46, quick solutions 48, and response templates 50.

As has been previously suggested, the sets 230, 240, 250 of business objects are selected from available business objects as being relevant to the categories to which they are linked. As such, the number of business objects of a particular type that are included within the particular set of business objects linked to a category can vary based on the number of business objects that are available. For example, the number of experts that are included in the set of linked business objects 230, 240, 250 depends upon the availability of subject matter experts who have knowledge relevant to the appropriate category. Similarly, the numbers of quick solutions 48 and response templates 50 that are included in a set of linked business objects 230, 240, 250, depend upon the stored contents of, for example, a knowledge base within the stored information repository 24 (Fig. 1).

Accordingly, if the interaction record business step 120 is being performed in the presence of an input signal 30 (not shown), then content of the input signal 30 will determine how the categorization scheme 135 is navigated. If the content of the input signal 30 relates to driving directions to LEGOLAND®, then the categorization scheme would be navigated through the link 155 to the LEGOLAND® category 160, and through the link 205 to the driving directions category 210. If the ERMS business process step 125 is subsequently performed while responding to the same input signal 30, then the business process step 125 will automatically receive business objects that relate to the chosen driving directions category 210 from the set of business objects 240.

Thus, in the foregoing example, the performance of the interaction record business process step 120 categorizes the input signal 30 to select and use the driving directions category 210. The selected category may subsequently be used by a later business process step, in this example, the ERMS process step 125. Accordingly, the exemplary categorization scheme just described exhibits coherency because a selected category identified in one step of a business process can be used to perform a subsequent business process step.

Although the Fig. 3 represents only business objects being linked to categories that exist at a lowest level (children) categories in the hierarchy, business objects may be also be linked to any category that is a parent category. As such, a categorization scheme may be defined such that any category that is selected may be linked to a set of business objects 44.

Additional structural detail of a categorization scheme in accordance with the categorization schemes of Fig. 3 is shown in Fig. 4. In one example, Fig. 4 illustrates the selected category 410 in a magnified portion of a hierarchical categorization scheme 300. The selected category 410 is linked by a link 405 to a parent category (not shown) above it. The selected category 410 is also linked to the linked business objects 44. The selected category may exist at any level in the hierarchical categorization scheme 300. Each of the linked business objects 44 are selected from among all available business objects that are stored, for example, in a database (not shown) in the enterprise computing system 10. The linked business objects 44 may include experts 46, quick solutions 48, and/or response templates 50.

Each of the linked business objects 44 is linked to the selected category 410 by a unique link. Individual experts 46a, 46b, and 46c are linked to the selected category 410 by links 47a, 47b, and 47c, respectively, of the "is_expert" type. Individual quick solutions 48a, 48b are linked to the selected category 410 by links 49a, 49b, respectively, of the "is_solution" type. Individual response templates 50a, 50b, and 50c are linked to the selected category 410 by links 51 a, 51 b, and 51 c, respectively, of the "is_response_template" type. Accordingly, one way to modify the categorization scheme is to modify the links 47, 49, or 51.

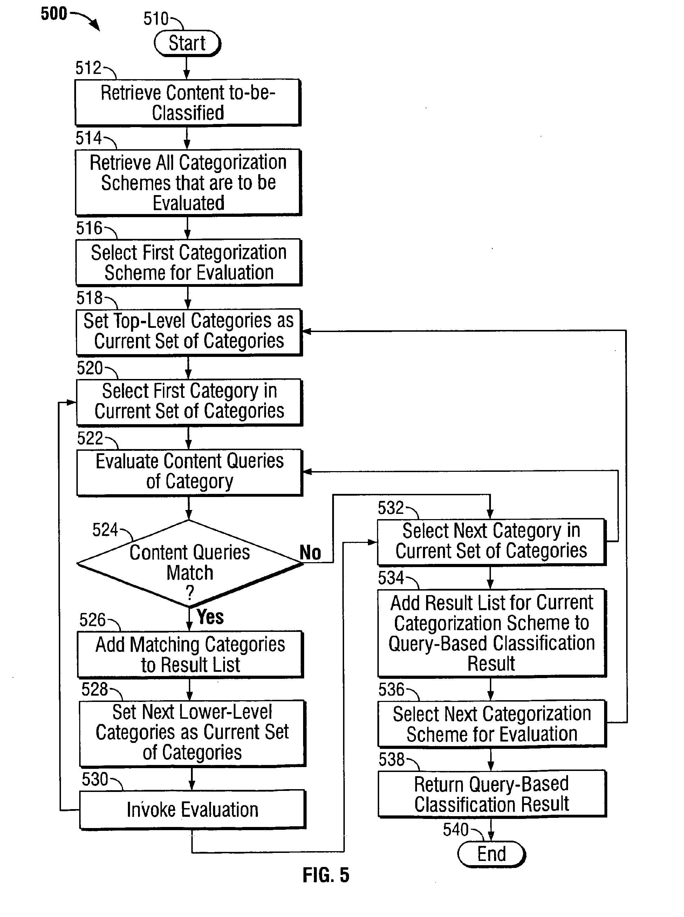

Use of the categorization schemes of Fig. 3 in, for example, the category selection process performed by the query-based classification module 410 (Fig. 2A) involves the identification of one or more appropriate categories from within a categorization scheme. An exemplary process for automatically identifying a selected category 410 is illustrated in flow chart form in Fig. 5.

The categorization schemes of Fig. 3 can be navigated at run-time using a navigation procedure illustrated in the exemplary run-time flowchart 500 of Fig. 5. The flowchart 500 illustrates steps performed to use categorization schemes (see, e.g., Fig. 3) to select categories relevant to the content of an incoming message. The sequence and description of the steps is exemplary, and may be modified to achieve other implementations described by this document.

Starting at 510, the contents of the incoming message 30 are retrieved at 512. The contents may be retrieved, for example, from a memory location in which the message was initially stored. All categorization schemes that are to be used to evaluate the retrieved contents are retrieved at 514. In general, categorization schemes will be retrieved from the categorization scheme database 26 (Fig. 1). A first of the retrieved categorization schemes is selected to be evaluated first at 516. The top-level categories of the selected categorization scheme are designated as the "current set of categories" at 518.

After setting the current set of categories, the first category in the set is selected at 520. Predefined content queries associated with the selected category are evaluated against the content of the incoming message at 522. If the content matches the queries at 524, then the matching category is added to a results list at 526. The children, if any, at the next lower level of the selected category are assigned at 528 to be the current set of categories within the new recursion step that is started at 530.

Each of these children is evaluated in a recursive fashion by looping back to step 520 until no matching categories are found. In effect, this recursion loop may be described as navigating from the top level of categories of the hierarchical categorization scheme to successive matching child categories. A matching category is added to the result list at 526 if all its parent categories are matching.

After the recursive evaluation started at 530 has finished, or if no match has been found for the content queries at 524, then the next (i.e., neighbor) category on the same level in the current set of categories is selected at 532. If more categories require evaluation, then the flow loops back to the evaluation step 522. However, if no categories remain to be evaluated in the current set of categories, then the result list for the selected categorization scheme are added to the query-based classification result at 534.

If another categorization scheme remains to be evaluated, then the next categorization scheme is selected at 536, and control loops back to step 518. However, if no more of the retrieved categorization schemes remain to be evaluated, then the query-based classification result is returned at 538. After returning this result for use by the business application, the process of classifying content of the received message is completed at 540.

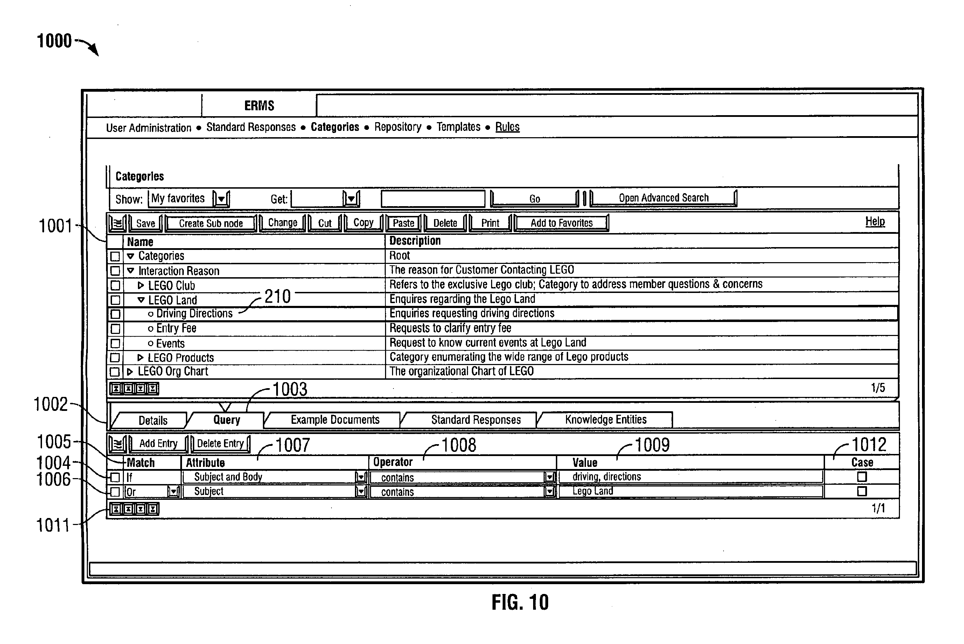

The result returned by the process of flowchart 500 is a set of categories that have been selected. As will be described in detail with reference to Fig. 10, each selected category relates to the content of the incoming message by virtue of queries defined for each category. In order for a category to be selected according to the above-described navigation of a, all queries of a parent category must have been evaluated to be "true" in step 524 for the content of the incoming message. In other words, the categories in a categorization scheme relate to increasingly specific content at increasingly lower levels in the hierarchy.

Following the query-based classification procedure of Fig. 5, the run-time process proceeds using business objects that are linked to the selected categories. The business processes may use these linked business objects to perform steps in the business process, which in this example involves responding to an incoming message. In responding to the incoming message, subsequent process steps may need business objects linked to relevant categories. If the business processes are configured to use coherent categorization, then those subsequent business process steps each proceed by again using business objects that are linked to the previously selected categories.

It is not necessary that all business processes that are performed use the same business objects. Although multiple business objects may be linked to the selected category (or selected categories), the business process may be configured to filter out all but the most relevant types of business objects.

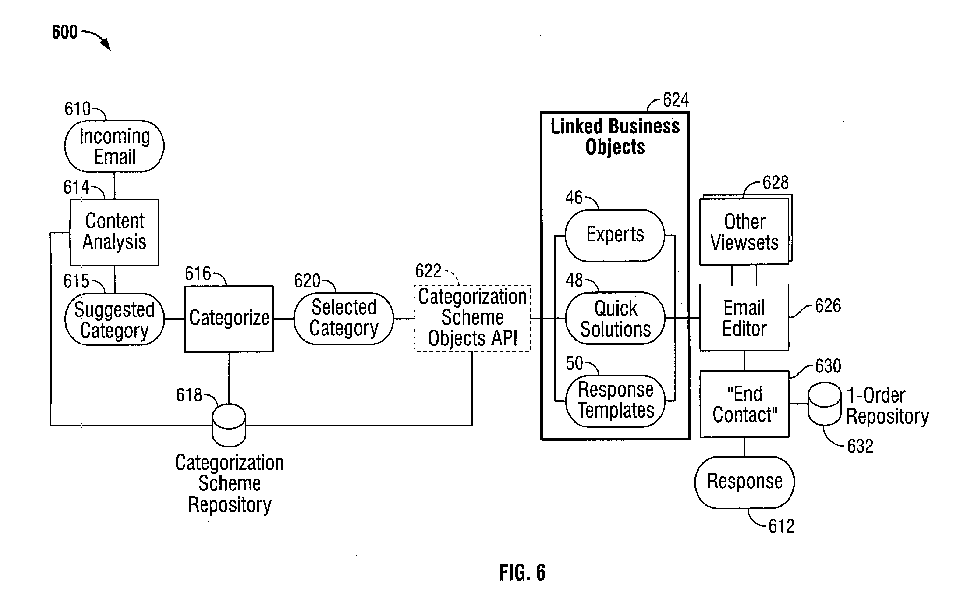

The foregoing steps of flowchart 500 (Fig. 5) may be implemented, for example, in a query-based classification module 38 (Fig. 2A) that performs content analysis in an ERMS. In Fig 6., an ERMS forms part of an enterprise computing system 10 (Fig. 1) to perform business processes other than those performed by the ERMS specific business application. As such, coherent categorization can be used in the enterprise computing system 10 to perform, for example, 1) a content analysis step in the ERMS business process, and then 2) a step in a different business process. In this connection, the other business process may be, but is not limited to, recording the interaction, performing service-related procedures, scheduling service orders, processing sales orders (e.g., 1-orders), data warehousing (e.g., SAP's Business Warehouse), and the like.

In Fig. 6, the result of a coherent categorization is first used by an ERMS business process 600 to respond to an incoming email message 610 by producing a response 612, and then to provide data to a different business process, namely a 1-order repository 632. When the ERMS business process 600 of this example receives the incoming email 610, a content analysis 614 is performed to analyze the contents of the incoming email 610. The analysis may incorporate, for example, a text mining engine (not shown) which provides text to be categorized to a categorization scheme stored in a categorization scheme repository 618. The result of the content analysis step 614 is a suggested category 615.

The suggested category 615 is automatically suggested to a user in a categorization step 616. The categorization step 616 corresponds to the selection process described in Fig. 5. Nevertheless, the user may have the option to accept the suggested category 615, or to choose another category as the selected category 620.

The selected category 620 determines which API 622 is used to display the linked business objects. The API 622 defines, for example, the inheritance rules for displaying business objects. Inheritance rules may optionally be used to cause the display of business objects that are directly and/or indirectly linked to the selected category. For example, the inheritance rules may be configured to cause the display of all objects that are linked to the children of the selected category in addition to the objects directly linked to the selected category. In addition, the inheritance rules may optionally be configured to display business objects linked to parent categories of the selected category. The API 622 is typically configured when the software is installed in the enterprise computing system, and may be modified through maintenance. Accordingly, the API 622 can display business objects linked to parents and/or children of the selected category 620, in addition to the business objects in the set of linked business objects 624 that are directly linked to the selected category 620. The linked business objects 624, which corresponds to the linked business objects 44 in Fig. 2A, include experts 46, quick solutions 48, and/or response templates 50.

The linked business objects 624 represent stored information that is relevant to performing the ERMS business process 600, and specifically to responding to the incoming email 610. For example, the experts 46 may identify a business partner who has special expertise that relates to the content of the incoming email 610. The quick solutions 48 may include documents that address the customer's questions in the email. In addition, the response templates 50 may provide the text of a reply email message so that the agent receives a prepared draft of a reply message.

Using these linked business objects 624, an agent can use an email editor 626 to finalize the response 612. Optionally, the agent may use other viewsets 628 to perform other steps in finalizing the response 612. For example, the agent may use one of the other viewsets 628 to attach a document that is one of the quick solutions 48 in the linked business objects 624. The agent may also involve a subject matter expert in the response 612 by using an expert 46 in the linked business objects 624 to contact the subject matter expert.

In the final step of the ERMS business process 600, the agent ends the contact 630 by, for example, sending the response 612 in the form of an email. Additional processes may be initiated as the contact is ended at 630. In this example, the 1-order repository 632 may record information about the just completed ERMS business process 600 for later uses. In other implementations, information about the transaction may be passed to other business processes within the enterprise system 10 for purposes such as, for example, reporting, monitoring, quality control, and the like.

The just described exemplary ERMS business process 600 may include a number of business process steps that, when performed together, constitute a system for responding to customer emails, and particularly business processes that are capable of supporting a large volume of interactions. Such business processes provide capabilities to interact with customers by e-mail, telephone, mail, facsimile, internet-based chat, or other forms of customer communication. Such business processes may be manual, partially automated, or fully automated. Business processes that include automation generally use computers, which, in some implementations, take the form of enterprise computing systems that integrate and perform multiple business processes.

In the foregoing example, business objects are linked to a selected category, and the business objects are used to perform a step in responding to the incoming message. The step may be performed once per incoming message, or as many times as the run-time user provides an input command to perform that business process step. As such, user input determines which business process steps are performed in the presence of a particular incoming message. Whether multiple processes are performed or not, the categorization is coherent if multiple business process steps are configured to be able to use business objects linked to a selected category.

In this implementation, the content analysis step 614 involves selecting a category based upon the content of the incoming email 610. The content of the email 610 may be first be analyzed by, for example, a text-mining engine. In implementations, the content analysis step 614 may include identifying key words in the header or body, for example, of the incoming email 610. Key words may include words, phrases, symbols, and the like, that are relevant to performing the categorization. With reference to Fig. 3, categorizing the email 610 involves selecting appropriate categories 110 under the appropriate categorization scheme 125 and based on the analyzed content of the e-mail 610.

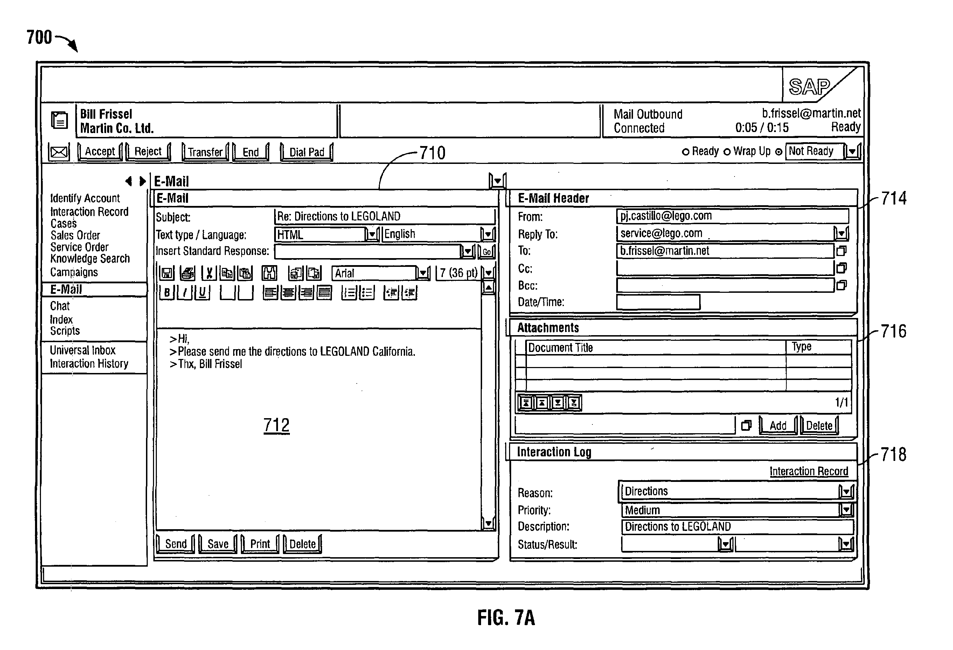

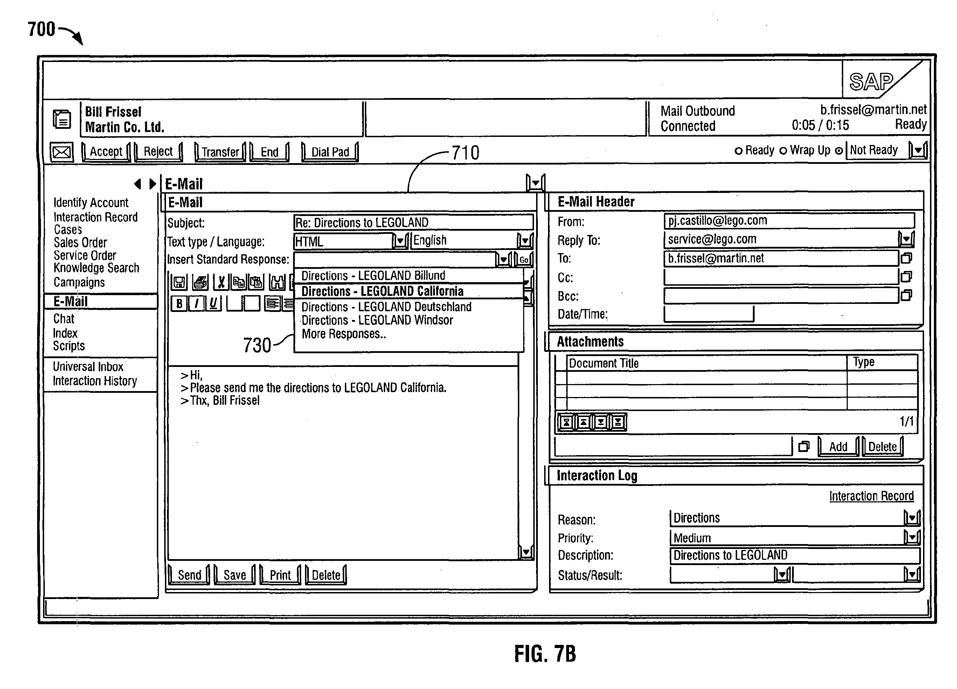

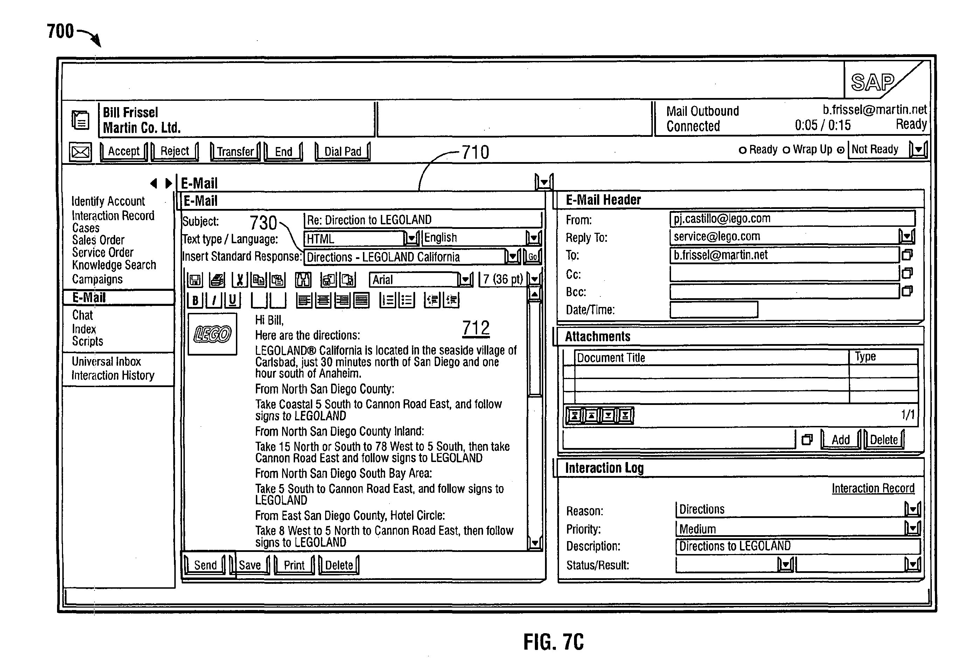

As will be shown below (in Figs. 7-9), the computing system displays the business objects that are linked to the selected category 230. This display is customized, as described above, using the categorization scheme objects API 622. The display of the linked business objects 624 allows the user to efficiently identify likely responses to the incoming email 610.

The linked business objects 624 that are displayed can be of at least three types. One type is an expert 46. Experts provide contacts and referrals to human resources who can provide knowledge and support that relates to the selected category 620. Referral of a request in an incoming email 610 to one or more experts 46 may constitute part of preparing the response 612. An expert may be, for example, a business partner (e.g., an independent contractor) who has a business relationship with the enterprise, although not necessarily an employee relationship. A second type of linked business object 624 is a quick solution 48. Quick solutions 48 refer to stored business objects that contain information responsive to the incoming email 610. Quick solutions 48 include documents that directly contain the responsive information, as well as pointers to other sources of such direct information, such as, for example, internet hyperlinks, website addresses, and uniform resource locators (URLs). A third type of a linked business object 624 is a response template 50 that may be incorporated into the email editor 626 for the purpose of providing the agent preformatted, predefined content for an email. These response templates save the agent time in drafting the content of a response to each incoming email 610, thereby promoting the efficient performance of the ERMS business process 600. Both quick solutions 48 and response templates 50 may be stored in a knowledge base or other information storage container (e.g., the stored information repository 22 of Fig. 1) that may be accessed during run-time by business processes that use categorization schemes.

In the step of using the email editor 626 to finalize the response 612, the agent can review and edit the email. In addition, the user may also identify and attach to the email information, such as a quick solution 48 (e.g. documents or links to internet-based resources). Although the described implementation refers to preparing a response in the form of a reply email to the customer, other implementations may be used. For example, if an email is prepared, the email may be addressed to the customer who initiated the incoming email 610, or to an expert 46, or to both. However, the response 612 need not be in email form. By way of example, the response 612 may be in the form of a return phone call, facsimile, letter, or other action that may be internal or external to the enterprise system 10. If the incoming email 610 is a purchase order, for example, the response 612 may comprise an internally-generated sales order (via the 1-order repository 632) that ultimately results in the response 612 taking the form of a delivery of goods or services to the customer.

Depending upon the specific business process step that is being performed, the agent could also use the other viewsets 628 to finalize the response 612. The other viewsets 270 may be displayed as a part of a graphical user interface (GUI), as will be shown in Figs. 7-9. Example viewsets 628 include the following: e-mail editor, interaction log, attachment list, standard response query, value help selection query, standard response detail, knowledge search, search criteria, search results, and cart.

In implementations that are computer-based, portions of the business process steps to prepare the response 612 to the incoming email 610 may be automated. For example, the categorization scheme repository 618 may be stored in a memory location, such as a disk drive, random access memory (RAM), or other equivalent media for storing information in a computer system. In the end contact step at 630, for example, the results at the conclusion of the ERMS business process 600 may be stored in a memory location, such as in a 1-order repository 632, for subsequent use. In the categorization step (616), as a further example, the process of categorizing may be automated, for example, according to the flowchart 500 (Fig. 5). Such automation may use a programmed processor to rapidly execute a series of pre-programmed decisions to navigate a categorization scheme for the purpose of identifying which predetermined categories are most relevant to performing the business process steps for responding to the incoming email 610.

In Figs. 7-9, a series of screen shots illustrates what an agent sees in the run-time environment 14 when executing the ERMS business process 600 of Fig. 6. In particular, the screen shots show an exemplary run-time graphical user interface (GUI) by which an agent could achieve improved productivity by using coherent categorization to perform various steps in the ERMS business process 600.

In Fig. 7A, categorization of an incoming e-mail is used to automatically suggest e-mail response templates 50. A GUI 700 includes an e-mail editor viewset 710 that includes text 712 from an incoming e-mail message that has already been received. Associated with the e-mail is the sender and recipient e-mail address information in an e-mail header viewset 714. Below the e-mail header viewset is an attachment viewset 716. When a response e-mail is completed and submitted, the contents of the e-mail editor viewset 710, including the original text 712 and any text added by the agent, are e-mailed, along with any attachments identified in the attachment viewset 716, to the recipient in the e-mail header in viewset 714. The GUI 700 further includes an interaction record viewset 718 for monitoring and storing information about the reason for the interaction (see the interaction record business process step 120 of Fig. 3).

In this example, the agent has first entered information into the interaction record viewset 718 based upon the agent's analysis of the text 712 of the incoming message. The agent has specified that the reason for the e-mail relates to directions, that the priority of the interaction is medium, and that the e-mail may be described as relating to directions to LEGOLAND®. As one step of the ERMS business process, the information entered into the interaction record viewset 718 may be stored within the enterprise system 10 for later use.

The information that the agent has entered into the interaction viewset 718 provides the basis for performing a categorization using a categorization scheme. Given the above-entered information, and with reference to Fig. 3, the interaction record business process step 120 initiates a categorization through link 130 of the interaction reason categorization scheme 135. Moreover, because the reason relates to directions, the categorization traverses through the link 155 to the LEGOLAND® category 160, and from there, traverses through the link 205 to the driving directions category 210. Accordingly, the selected driving direction category 210 is linked by the link 235 to the set of linked business objects 240. The linked business objects 240, being linked to the selected category 210, are used to perform the interaction record business process step 120. Because the categorization is coherent, the same linked business objects 240 may be used to perform other subsequent steps in the ERMS business process.

In Fig. 7B, the agent has initiated the step of creating the response email by selecting the drop down list box (DDLB) 730 in the email viewset editor 710. Having previously filtered out all business objects that are not linked to the selected driving directions category 210, the e-mail editor viewset 710 further filters out all business objects that are not response templates 50. A drop-down list box menu 730 displays four response template titles that are in the response templates 50 within the set of linked business objects 240. In this example, the agent can select from the four LEGOLAND® locations, namely Billund, California, Deutschland, and Windsor. According to the text 712 of the incoming message, the agent selects the appropriate response template that provides directions to LEGOLAND® California.

In this example, an analysis of the content of the email has identified that the incoming email request relates to driving directions. In response, the DDLB 730 displays a list of suggested standard responses that are linked to the selected driving directions category 210. The suggested responses include the response templates 50 from the linked set of business objects 240. As such, the suggested responses displayed in the DDLB 730 derive from a categorization based on the text 712 of the incoming email.

In Fig. 7C, the agent has selected an appropriate one of the suggested response templates 50. The text of the selected response template 50 has been automatically entered into the e-mail editor viewset 712. With reference to Fig. 6, all that remains for the agent to do to finalize the ERMS business process 600 is to end the contact 630 and to submit the response 612. This example illustrates how business objects that are linked to a selected category may be used to perform a business process step, namely, the step of inserting an email response template into a response email.

Although, in the foregoing example, the agent selected one of the suggested response templates 50, the agent could have made other choices. For example, the agent could have selected the "More Responses..." from the DDLB 730 to display other business objects that are not linked to the selected driving directions category 210. Alternatively, the agent could have selected more than one of the response templates 50 for inclusion in the reply email.

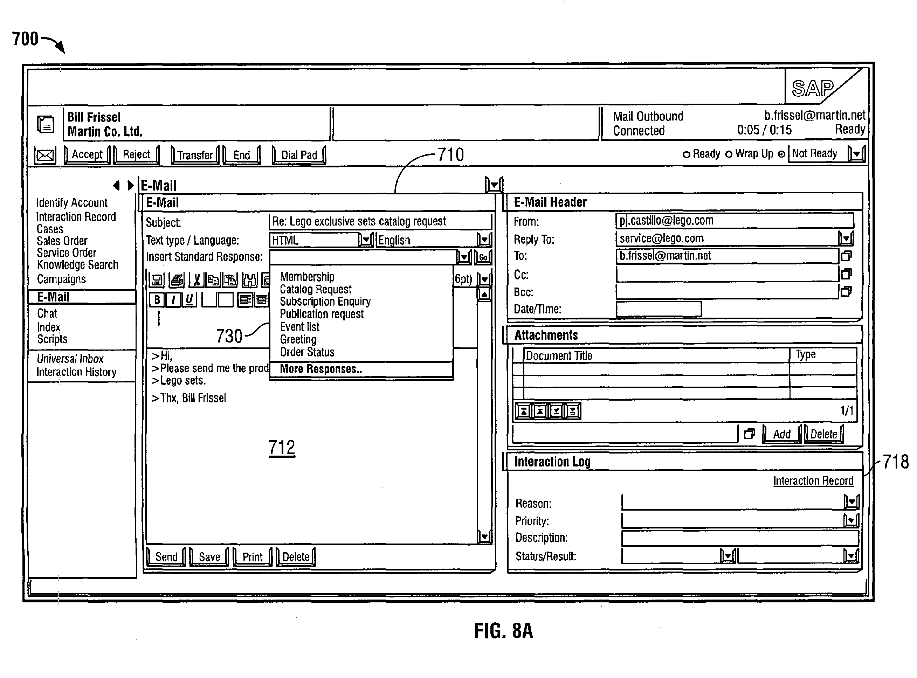

In Figs. 8A-8F, a standard response template for driving directions to LEGOLAND® in California is processed in a different way than the example illustrated in Figs. 7A-7C. In Fig. 8A, instead of analyzing the text 712 of the incoming email and then entering information about the e-mail into the interaction record viewset 718, the agent first selects the DDLB 730 to manually select a category by navigating through a hierarchical categorization scheme. In this case, the agent selects the alternative "more responses.." in the DDLB 730 instead of any of the standard responses that are listed by default (not as the result of a categorization) in the DDLB 730.

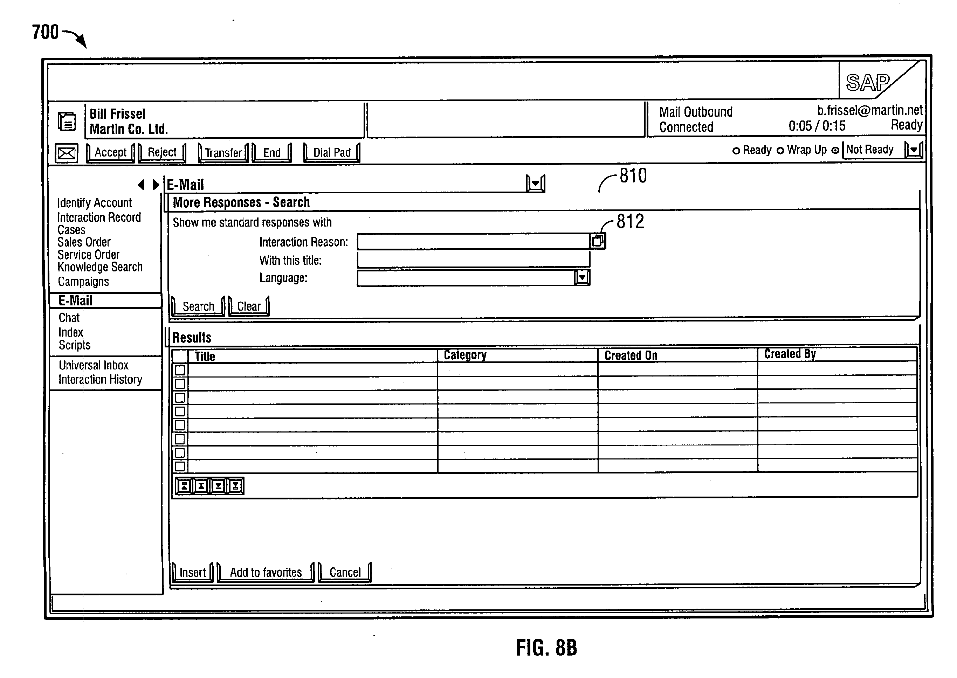

In Fig. 8B, a "more responses" search viewset 810 is displayed in the GUI 700. Here, the agent selects the interaction reason field 812 to review the details of available interaction reasons. With reference to Fig. 3, the agent will be able to review and select from among available categories within the interaction reason categorization scheme 135.

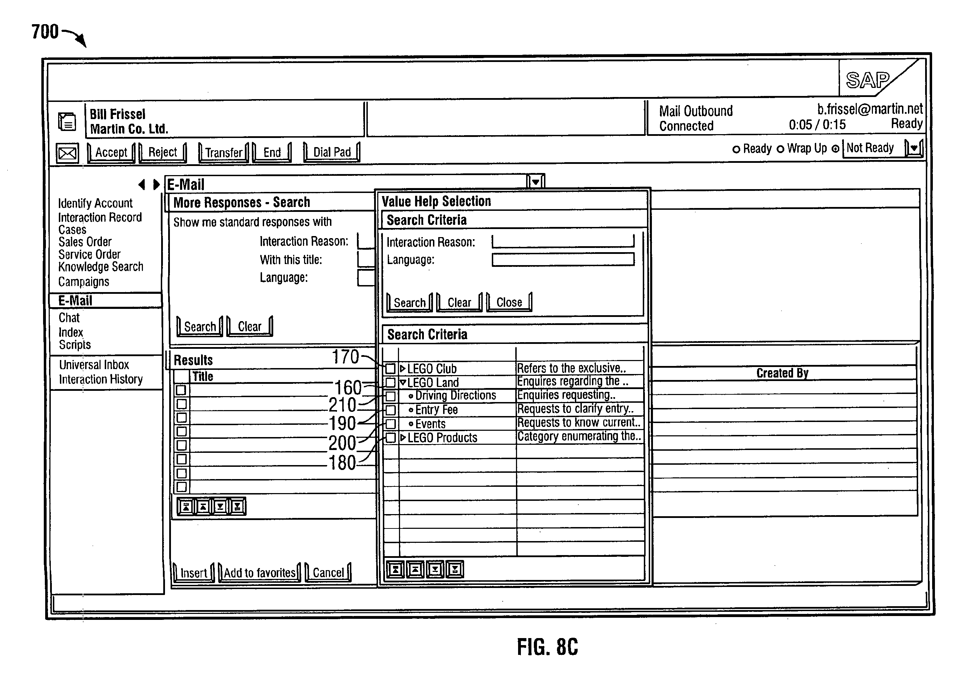

In Fig. 8C, a number of categories are listed with indications of hierarchical relationships. For example, three categories at a first level within a hierarchy correspond to the categories in Fig. 3 of LEGOLAND® 160, LEGO® CLUB 170, and LEGO® PRODUCTS 180. Under the LEGOLAND® category 160 are displayed the child categories of entry fee 190, events 200, and driving directions 210. Based upon the agent's analysis of the content of the incoming e-mail message, the agent has selected the driving directions category 210.

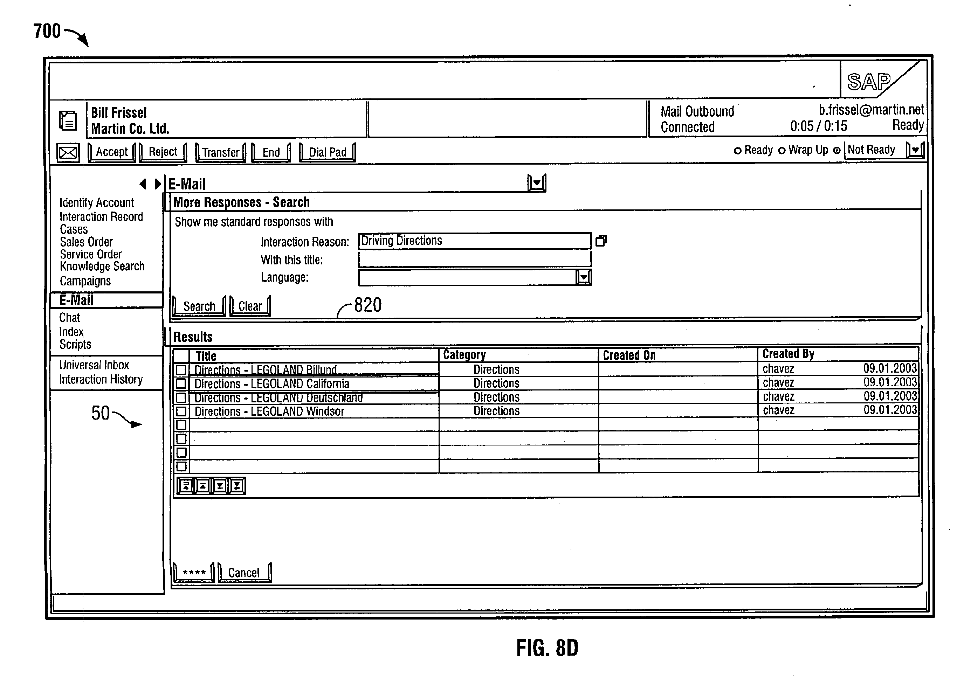

In Fig. 8D, four response templates 50 linked to the selected driving directions category 210 are displayed in a results viewset 820. Based upon the agent's analysis of the contents of the incoming email, the agent has selected the most appropriate response template 50, namely the directions to LEGOLAND® in California.

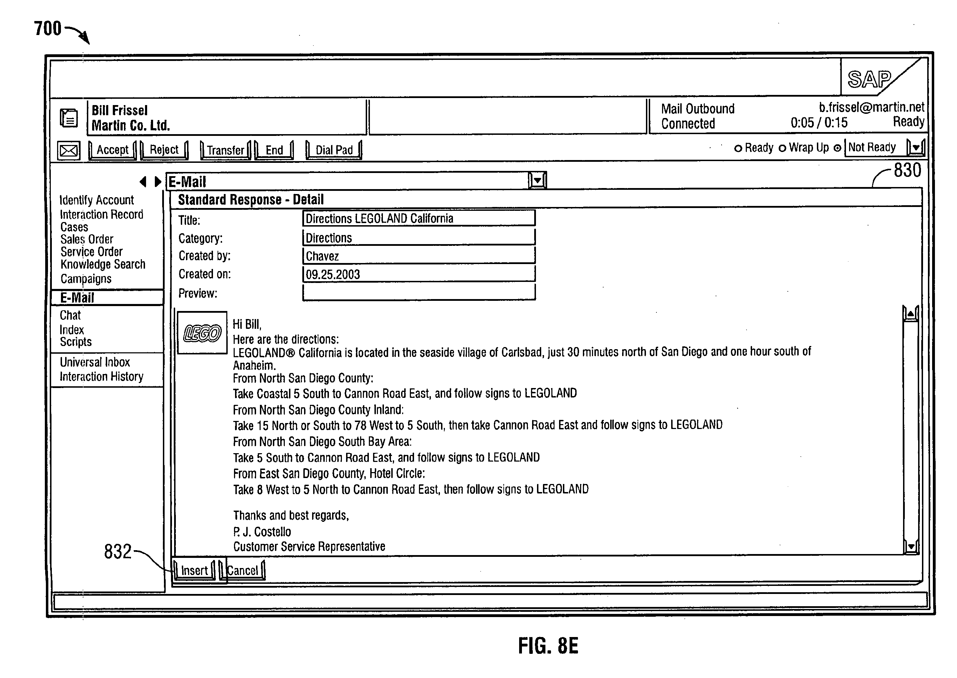

In Fig. 8E, the standard response detail viewset 830 displays the selected response template for the agent to review. The agent has selected the "insert" button 832 to insert this response template into the reply e-mail.

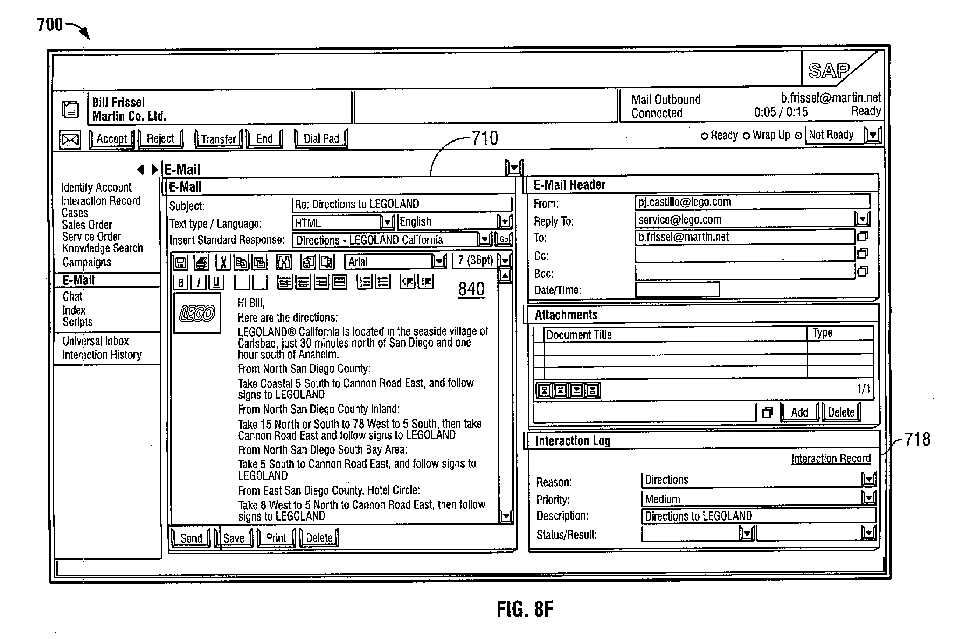

In Fig. 8F, the agent can review the reply email in the email editor viewset 710. The reply email 840 now includes both the text 712 of the incoming message and the selected response template 50. Having manually made the categorization selections as described above, the interaction record business process step 120 has been automatically performed using the selected driving directions category 210. In the interaction record viewset 718, the reason and description have been automatically filled-in based upon the categorization.

The ERMS business process step 125 of replying to an e-mail has been performed. The agent has manually categorized the content of the incoming email using the interaction reason categorization scheme 135. After the agent selected the driving direction category 210, a response template 50 linked to that selected category 210 was included in the response. In addition, the selected driving directions category 210 was also used to perform the interaction record business process step 120. Accordingly, the interaction record categorization scheme 135 is coherent in this example because the selected category 210 was used to perform both the ERMS business process step 125 and the interaction record business process step 120.

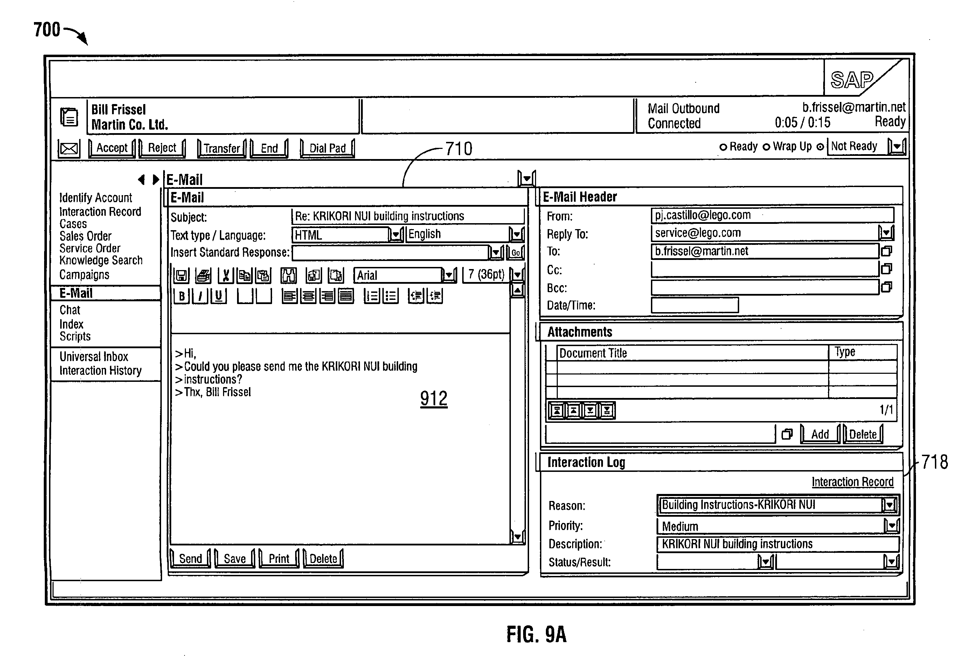

In Figs. 9A-9D, a coherent categorization scheme is illustrated by an example in which a category selected for the interaction business record process 120 is also used by the ERMS business process 125 to identify both a response template 50 and a quick solution 48.

In Fig. 9A, the agent has entered information about the incoming email message 912 into the interaction record viewset 718. The information entered by the agent is based upon the agent's analysis of the content of the incoming e-mail message 912.

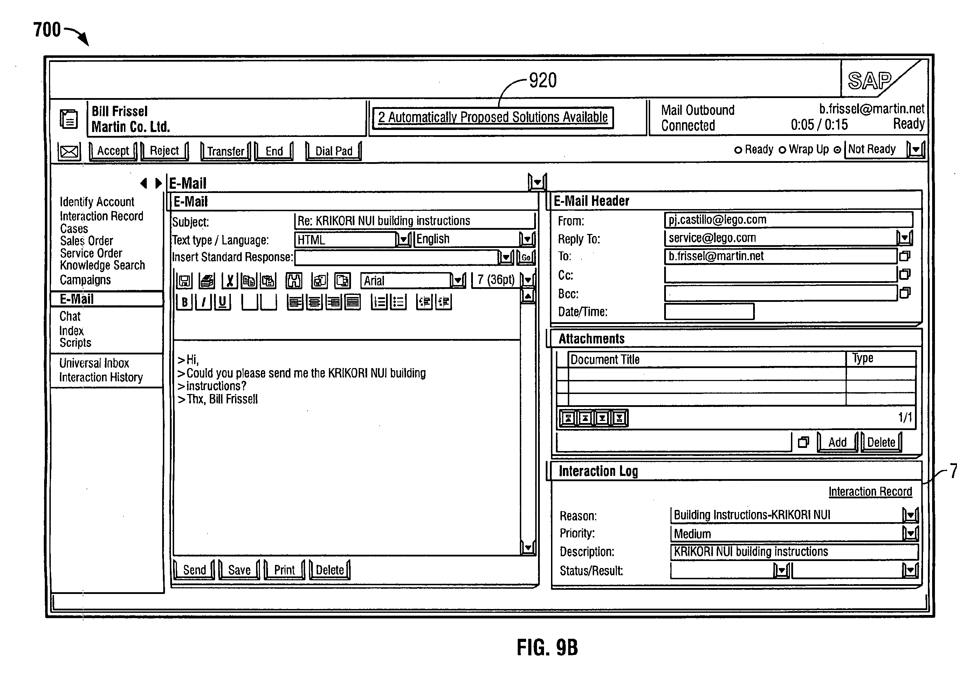

In Fig. 9B, the GUI 700 responds by displaying an alert message 920 to indicate that automatically proposed solutions are available. The alert message 920 indicates to the agent that the information entered into the interaction record viewset 718 has been categorized, and a category having attributes that match the entered information has been selected. Being alerted to this message, the agent looks for the proposed solutions by, for example, selecting a hyperlink associated with the alert message 920.

With reference to Fig. 3, the information entered into the interaction record viewset 718 in this example corresponds to the interaction record business process step 120, the interaction reason categorization scheme 135, the Lego® products category 180 and the building instructions category 220. As such, selecting the alert message 920 leads the agent to a viewset that displays suggested business objects that are in the set of business objects 250, which is linked by the link 245 to the chosen building instructions category 220.

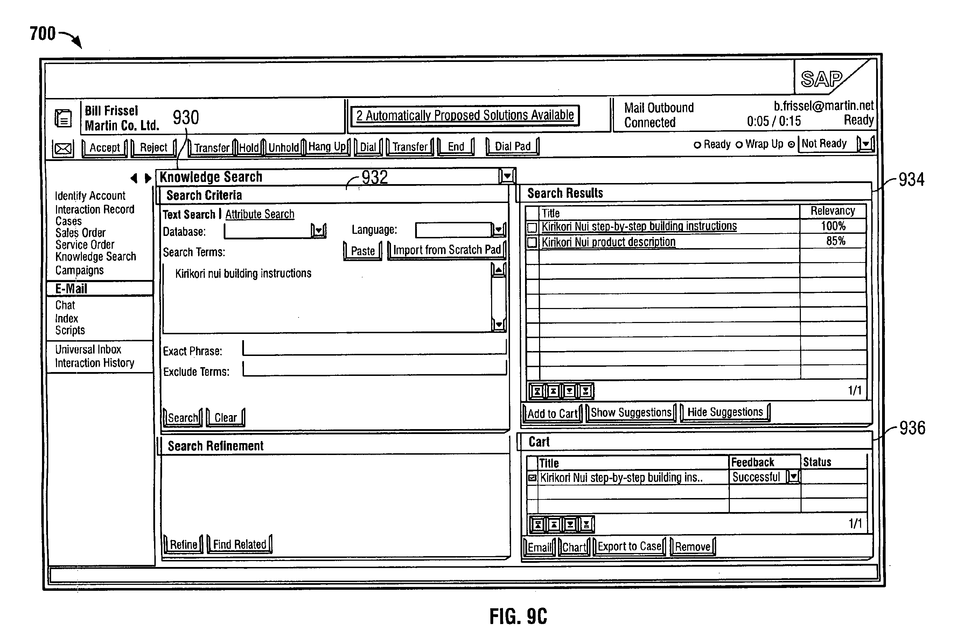

In Fig. 9C, a knowledge search viewset 930 allows the agent to perform free-text searches for business objects in, for example, the stored information repository 22 (Fig. 1). With reference to Fig. 6, the knowledge search viewset arises in the viewsets 628. The knowledge search viewset 930 has a number of sub-viewsets, including a search criteria area 932 for inputting search terms and queries, a search results area 934 for selecting business objects retrieved by the search, and a cart area 936 for displaying selected business objects for later attachment to the reply email. In this example, the reason and the interaction information record information from the interaction record viewset 718 (Figs. 9A-9B) automatically appear in the search terms dialog box in the search criteria area 932.

In the search results area 934, a list of search results is displayed. In this example, two search results are displayed, each of which corresponds to a quick solution 48 document. With reference to Fig. 3, the proposed quick solutions 48 are in the set of linked business objects 250 because the building instructions category 220 is selected. The displayed titles in the list may be in the form of hyperlinks. In some implementations, selecting a title in the search results area 934 causes the quick solution to be included in the cart area 936. In this example, the agent has selected one of the two quick solution 48 documents in the search results area 934, and the selected document is automatically displayed in the cart area 936.

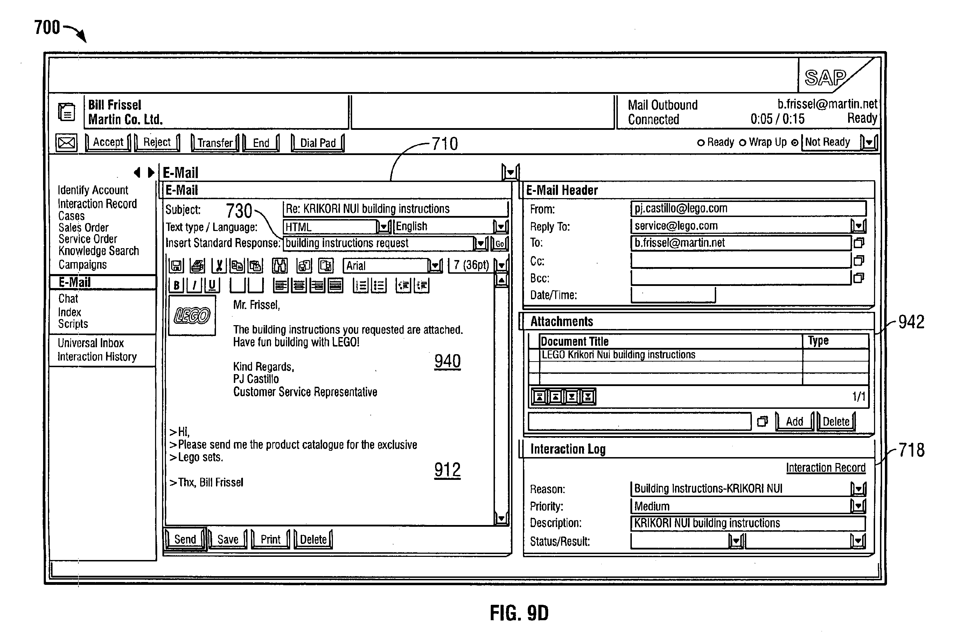

In Fig. 9D, an attachments viewset 942 includes the quick solutions 48 that were placed in the cart area 936 (Fig. 9C). Not only has the selected quick solution 48, namely, the "Lego® Krikori Nui Building Instructions" document, been included as an attachment to the e-mail, but the DDLB 730 has also been automatically populated with a corresponding response template 50. The agent has selected the suggested response template 50 in the DDLB 730. Accordingly, the text 940 associated with the corresponding response template 50 has been inserted into the e-mail adjacent to the original text 912.

In the foregoing example, two business process steps have been performed using business objects linked to a single selected category. The selected building instructions category 220, which was initially selected during the performance of the interaction record business process step 120, has been used in the ERMS business process to perform the step of attaching a suggested quick solution 48 to the reply e-mail, and to perform the step of inserting a suggested response template 50 into the reply e-mail.

With reference to Fig. 3, the interaction record business process step 120 was performed in response to the agent's entry of content analysis information into the interaction record viewset 718. This triggered a categorization of the entered information using the interaction reason categorization scheme 135. The selected building instructions category 220 is linked to the set of business objects 250. The set of business objects 250 was used to perform two business process steps. First, the quick solutions 48 of the set of linked business objects 250 were used to select a quick solution document to attach to the reply email. Second, the response templates 50 were used in the step of inserting response templates into the reply email. Accordingly, business objects that are linked to a selected category are used to perform multiple business process steps in the presence of an incoming message. As such, the example illustrates how a coherent categorization scheme can be used in the run-time environment 14 to help the agent prepare an e-mail with very little effort and with very little investment of time.

The foregoing examples have illustrates how quick solutions 48 and response templates 50 are types of linked business objects 44 that may be used to perform a business process step. As has been described above, experts 46 are another type of business object that can be linked to a selected category. In an ERMS business process, for example, using an expert 46 involves routing an electronic message to notify and to inform a human expert about the incoming message. Each human expert has the capability to respond to certain categories of incoming messages. The capability of each human expert determines which categories are linked to each expert 46. Because experts that can provide high quality responses are limited resources, and because retaining experts can be costly to an enterprise, the efficient allocation of the time of experts is an important factor in enterprise system cost and quality. Accordingly, the ability to refer only appropriate incoming messages to experts, or routing incoming messages to the appropriate experts, is important.

## Creating Categorization Schemes

In order to be able to perform the above-described query-based classification, a categorization scheme must first be defined. One convenient method of defining a categorization scheme that may be used by the query-based classification module 38 (Fig. 2A) is to use a design-time graphical user interface (GUI) like that illustrated in Fig. 10. With a user interface 1000, a user can arrange categories within the categorization area 1001 to have hierarchical relationships within the categorization scheme. The categorization area 1001 displays the names of categorization schemes and categories in rows. The user can enter, modify, and display categories in the categorization area 1001.

Accordingly, the categorization area 1001 in the user interface 1000 serves as a tool to enter, modify, and display categorization schemes. As can be appreciated, the categorization area 1001 is used to define various links that structure the hierarchical relationships within the categorization scheme. With reference to Fig. 3, the categorization area 1001 is used to define the links 155, 165, 175 between the categorization scheme 135 and the categories 160, 170, 180. Furthermore, the categorization area 1001 is used to define the links 185, 195, 205 between the parent category 160 and the child categories 190, 200, 210. However, the categorization area 1001 in this example does not (by itself) define links between business process steps and categorization schemes, or between categories and business objects. In this example, those links are defined in conjunction with the linking area 1002.

In the linking area 1002, a number of tabs are provided to display various fields related to a user-highlighted category in the categorization area 1001. In this example, the driving direction category 210 is the highlighted category in the categorization area 1001. In Fig. 10, the query viewset tab 1003 is selected. In this example, the user interface 1000 is used to define a query for the highlighted category. The defined query can be evaluated to determine if the content of an e-mail corresponds to that category.

In the query viewset tab 1003, two rows of query criteria are shown. Elements for defining a query may be entered into columnar fields defined in a first row 1004 and a second row 1006. In the first row 1004, a match column 1005 includes a leading "if" statement. In the second row 1006, the match column 1005 includes a user-selectable drop-down list box (DDLB) into which the user can select various conditional conjunctions such as, for example, "and," "or," and "nor." The conjunction provides the logical operation that connects queries in the rows 1004, 1006. If at run-time, for example, the row query 1004 evaluates as "true" and if the row query 1006 evaluates as "false," and if the conjunction 1005 in the row 1006 is "or," then the complete query will evaluate as "true." However, if the conjunction 1005 in the row 1006 is "and," then the complete query will evaluate as "false." If the complete query for a category evaluates as "true," then the content of the e-mail "corresponds" to that category. On the other hand, if the complete query evaluates as "false," then the content does not correspond to that category.

Columnar fields in each row define the row queries for rows 1004, 1006. An attributes column 1007 provides a DDLB through which the user can identify attributes that are to be evaluated using the query defined in that row. For example, if the query of an e-mail relates to information contained in both the subject line and the body of the email, each row query can evaluate the content of the subject line, the body, or both. In this example, the row 1004 will evaluate "subject and body," while the row 1006 query evaluates only the "subject."

As described above with reference to flowchart 500 (Fig. 5), the navigation proceeds from parent categories whose queries match the content of an incoming message, to child categories of each matching parent category. As such, in one example, a category may be selected if the queries defined for that category evaluate as "true" and all successive parent categories up to the top-level of the hierarchy also evaluate as "true." In this example, a category that is not at the top-level in the hierarchy can be selected only if that category and its parent category on the next-higher level both evaluate as "true." Other examples are possible, as can be appreciated by one of skill in the art.

An operator column 1008 provides a DDLB through which the user can define the relational operator to be used to evaluate the query in that row. For example, the operator column 1008 may include operators such as equality, inequality, greater than, less than, sounds like, or includes. A value column 1009 provides a field in each of rows 1004, 1006 into which the user can enter values for each row query. If the attribute 1007 and the value 1009 in a row query have the relationship of the selected operator 1008, then that particular row will evaluate as "true." If the attribute 1007 and the value 1009 do not have the relationship of the selected operator 1008 for a particular row, then that particular row will evaluate as "false." Each row is connected to the previous row or to the subsequent row through a logical match operator 1005, such as "and," "or," and "nor." Although only two rows 1004, 1006 are shown in this example, other rows may be entered using the scroll keys 1011. A case column 1012 provides a check box which, when checked, makes the query in that row case sensitive.

Query-based classification may be implemented using XML language. Both example-based and query-based classification may use a search engine to extract content from a message that is to be evaluated. For example, a natural language search engine may be used to identify text from the subject line of an email message for evaluation against queries defined for categories in a categorization scheme. Accordingly, a commercially available text search engine may be used to perform the step of retrieving content to be classified, as in step 512 (Fig. 5). One suitable search engine, offered under the name TREX, is commercially available from SAP. Other software packages with text search capabilities are commercially available and are also suitable for retrieving content to be classified, as described in this document.

## Example-Based Classification

The foregoing discussion describes the details of query-based classification so that the operation of the query-based classification module 38 of Fig. 2A can be understood. The following discussion describes the details of example-based classification so that that the operation of the example-based classification module 39 of Fig. 2A can be understood. Example-based classification was previously described in U.S. Patent Application Serial No. 10/330,402, which was filed on 27 December 2002.

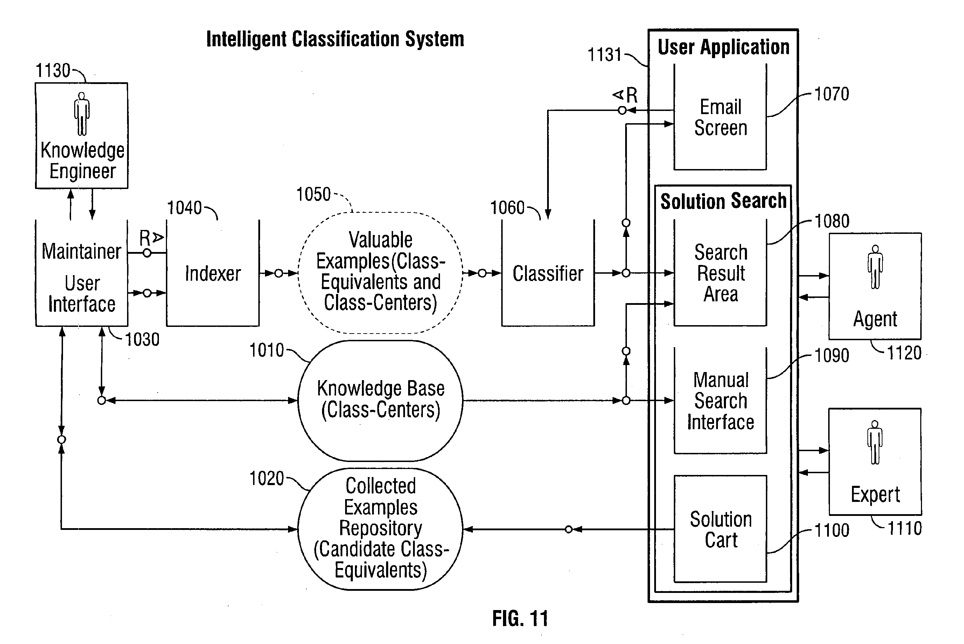

Example-based classification can most easily be described in the context of an application, such as an ERMS application. An exemplary ERMS, as illustrated in Fig. 11, includes a computer-based system that performs content analysis using example-based classification. The system is designed to provide automatic recommendations based upon a classification of an incoming message. For example, in one implementation, the system may provide recommended solutions to a given problem description contained in the incoming message. With reference to Fig. 2A, for example, the system may provide a suggestive list of persons or entities (e.g., experts 46) given a request for information contained in the incoming message 34.

As shown in Fig. 11, the system includes a knowledge base 1010 that serves as a repository of information. Although only a single knowledge base 1010 is illustrated in Fig. 11, the system may be configured to support multiple knowledge bases. The knowledge base 1010 may include a collection of documents that may be searched by users, such as, for example, electronic mail (e-mail message), web pages, business documents, and faxes. With reference to Fig. 1, the knowledge base 1010 may be included in the stored information database 30.

In one example, the knowledge base 1010 stores authoritative problem descriptions and corresponding solutions. The stored information in the knowledge base 1010 is manually maintained. The manual maintenance is typically performed by a knowledge administrator (or knowledge engineer) 1130, who may edit, create, and delete information contained in this knowledge base 1010. Because the stored information in the knowledge base is manually maintained, it may be referred to as authoritative. For example, an authoritative problem description may be a problem description submitted by a customer and then manually added to the knowledge base 1010 by the knowledge engineer 1130. As such, the authoritative problem description is manually maintained as part of a knowledge management process, and may represent, for example, what a customer has requested in the past, or is expected to request in the future.

In contrast to an authoritative problem description, a request for information is contained in an incoming message. The request for information may include a problem description, which is that part of the content that the system can classify and respond to. With reference to Fig. 3, an example of a problem description may be text in an email requesting driving directions to Legoland. As such, the textual content of the incoming message may correspond to the category 210. A corresponding solution is defined as the response that the system provides when it receives a problem description. An example of a solution to the foregoing problem description could be a map that is attached to a reply email. As such, the map may correspond to one of the response quick solutions 50 in the set of linked business objects 240. Although this example includes content that may be categorized because the pre-defined categorization scheme 135 (Fig. 3) happens to have corresponding categories, the content may also be classified using example-based classification so long as the content is sufficiently similar to a previous example stored in the previous messages database 28 (Fig. 1), which corresponds to a repository for collected examples 1020 in Fig. 11.

Initially, a problem description in an incoming request for information is non-authoritative. A non-authoritative problem description has not been incorporated into the knowledge base 1010 according to the knowledge management process. However, a non-authoritative problem description may be semantically equivalent to an authoritative problem description if the descriptions express the same facts, intentions, problems, and the like. For example, the following problem descriptions may be semantically equivalent: "my hard disk crashed," my hard drive had a crash," my disk lost all data due to a crash." Because each description describes the same problem using different words, the descriptions are semantically equivalent.

A problem description may be referred herein to as non-authoritative and semantically equivalent if it 1) has not been formally incorporated into the knowledge base 1010 by the knowledge engineer, and 2) describes the same problem as an authoritative problem description (i.e., one that is incorporated into the knowledge base 1010), but using different words. For example, a customer's email that describes a "hard disk failure" is non-authoritative when it is received, and may remain so unless the knowledge engineer 1130 subsequently incorporates it into the knowledge base 1010. Moreover, the problem description may be semantically equivalent to an authoritative problem description "computer disk crash," stored in the knowledge base 1010, because both have the same meaning.

Each problem description and corresponding solution stored in knowledge base 1010 represents a particular class of problems and may be derived from a previous request for information. Accordingly, each problem description and its corresponding solution stored in knowledge base 1010 may be referred to as a class-center.

A repository for collected examples 1020 is provided that stores non-authoritative semantically equivalent problem descriptions and pointers to corresponding solutions stored in knowledge base 1010. Each non-authoritative semantically equivalent problem description and pointer may be referred to as a class-equivalent and may be derived from a previous request for information. In one implementation, the determination of class-equivalents may be determined by an expert 1110 or by an agent 1120. For example, in a call center context, the expert 1110 may be an individual familiar with the subject topic of an unclassified problem description. Although only a single expert and agent are illustrated in Fig. 11, the system may be configured to support multiple experts and agents.

A maintainer user interface 1030 may be provided that allows a user to edit problem descriptions stored in both the repository of collected examples 1020 and the knowledge base 1010. For example, a knowledge engineer 1130 may use the interface 1030 to post-process and maintain both the class-equivalents stored in the collected examples repository 1020, and the class-centers stored in knowledge base 1010. In one implementation, the knowledge engineer 1130 may be responsible for creating additional class-equivalents and editing unclassified problem descriptions to better serve as class-equivalents. In other implementations, the collected examples repository 1020 and the knowledge base 1010 may be maintained automatically.

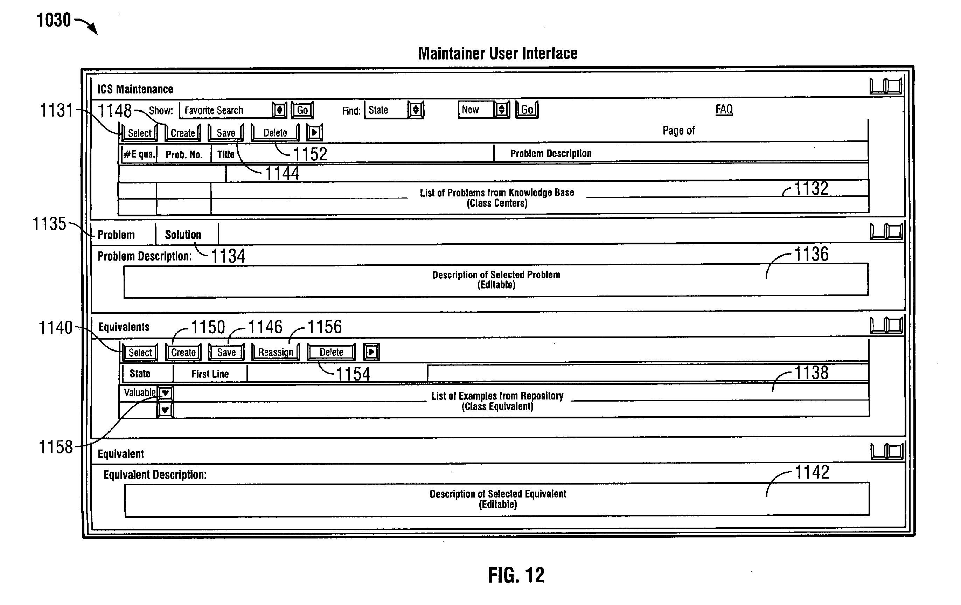

For ease of understanding, the details of the maintainer user interface 1030 will now be described by referring briefly to Fig. 12. After describing Fig. 12, the remainder of Fig. 11 will be described. The maintainer user interface 1030 is illustrated in detail in Fig. 12. In one implementation, a list of class-centers 1132 is stored in knowledge base 1010. The knowledge engineer 1130 may select a class-center from the list of class-centers 1132. Once the knowledge engineer presses a first select button 1131, the maintainer user interface 1030 may display the problem description relating to the selected class-center in an editable problem description area 1136 and any class-equivalents associated with the selected class-center in a list of class-equivalents 1138. The knowledge engineer 1130 may toggle between the class-center problem description and the class-center problem solution by selecting problem description button 1135 and problem solution button 1134, respectively. The knowledge engineer 1130 may select a class-equivalent from the list of class-equivalents 1138 and press a second select button 1140. Once the second select button 1140 is selected, the maintainer user interface 1030 may display the equivalent problem description relating to the selected class-equivalent in an editable equivalent description area 1142.

The maintainer user interface 1030 provides save functions 1144, 1146 that store edited problem descriptions in knowledge base 1010 and equivalent problem descriptions in the collected examples repository 1020. The maintainer user interface may provide create functions 1148, 1150 that generate class-centers in the knowledge base 1010 and class-equivalents in the collected examples repository 1020, respectively. The maintainer user interface 1030 may also provide delete functions 1152, 1154 to remove class-centers from the knowledge base 1010 and class-equivalents from the collected examples repository 1020, respectively, and a reassign function 1156 that may associate an already associated class-equivalent to another class-center.

The maintainer user interface 1030 also may provide state information regarding class-equivalents stored in the collected examples repository 1020. The state of a class-equivalent may be, for example, "valuable" or "irrelevant." The knowledge engineer may decide which of the collected examples are "valuable" by accessing a state pull-down menu 1158 associated with each class-equivalent and selecting either the "valuable" or "irrelevant" option.

Referring again to Fig. 11, an indexer 1040 is provided that transforms both "valuable" class-equivalents stored in collected examples repository 1020 and class-centers stored in knowledge base 1010 into valuable examples 1050. As such, the valuable examples 1050, which may also be referred to as a text-mining index, may be used as an input to a classifier 1060 to provide automatic solution recommendations. In one implementation, the indexer 1040 may be invoked from the maintainer user interface 1030. Other implementations may invoke the indexer 1040 depending on the number of new or modified class-equivalents stored in the collected examples repository 1020 or class-centers stored in the knowledge base 1010.

A user application 1131 provides access to problem descriptions and solutions in knowledge base 1010 and collects class-equivalents for storage in the repository for collected examples 1020. In one implementation, the system may be used by expert 1110 and agent 1120 to respond to incoming customer messages. In other implementations, user application 1131 may be provided directly to customers for suggested solutions.

The user application 1131 provides an e-mail screen 1070 and a solution search display 1105 comprising a manual search interface 1090, a solution cart component 1100, and search result area 1080 which displays auto-suggested solutions as well as solutions from manual search interface 1090.

The user application 1131 may be used either by an expert 1110, an agent 1120, or both, to respond to problem descriptions. Although only a single expert and agent are illustrated in Fig. 11, the system may be configured to support multiple experts and agents. In one example, the expert 1110 may be an individual possessing domain knowledge relating to unclassified problem descriptions. The agent 1120 may be a customer interacting directly with the system or a person interacting with the system on behalf of a customer. Other implementations may blend and vary the roles of experts and agents.

In an illustrative example, a customer may send a request for information including a problem description to the system via an electronic message. An e-mail screen 1070 may be implemented where the agent 1120 may preview the incoming electronic message and accept it for processing. Once an incoming message has been accepted, the classifier 1060 of the content analysis system may be invoked automatically and suggest one or more solutions from knowledge base 1010 using text-mining index 1050. In one implementation, the system may automatically respond to the incoming message based upon a level of classification accuracy calculated by the classifier 1060. In other examples, expert 1110 and agent 1120 may respond to the incoming message based upon one or more solutions recommended by the classifier 1060. The user application 1113 also includes an e-mail screen 1070 for displaying electronic messages to the agent 1120.

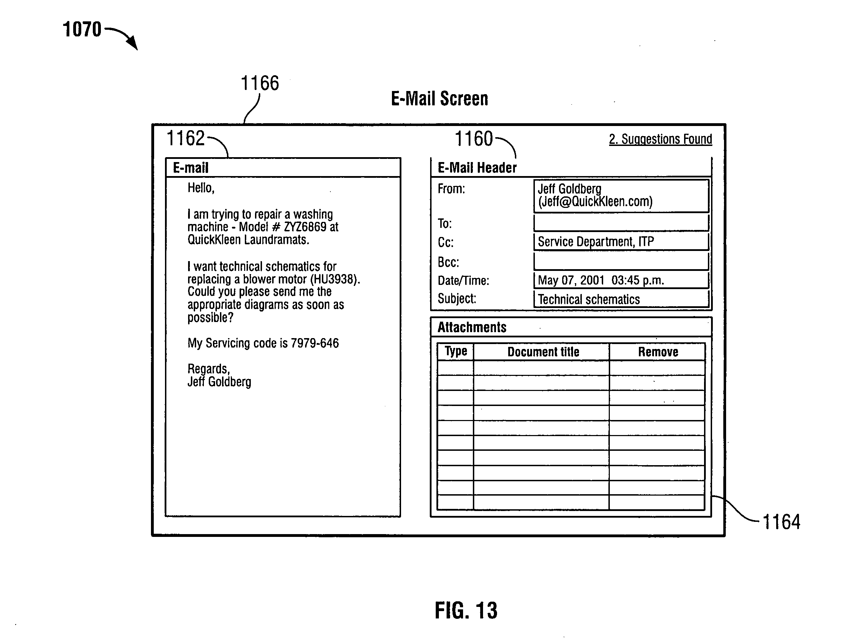

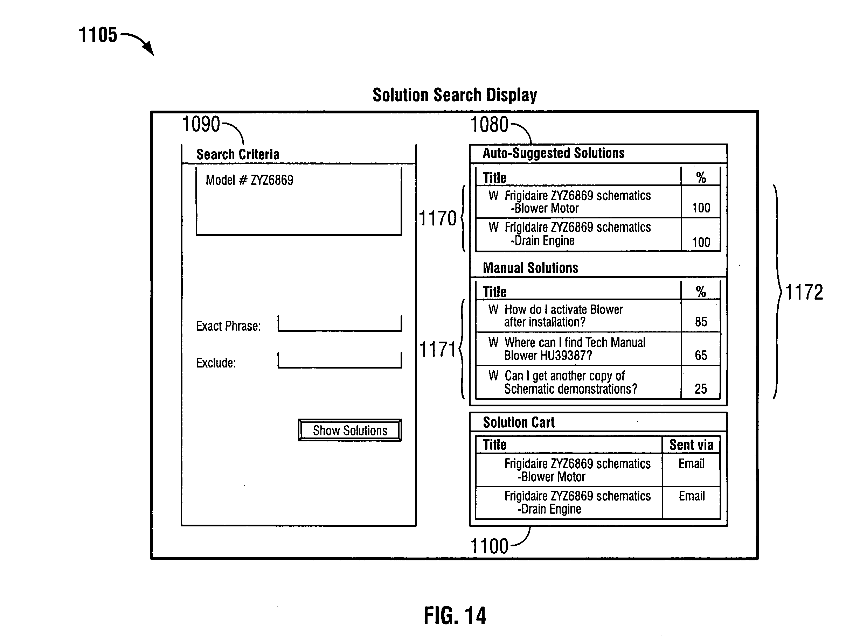

Fig. 13 illustrates a run-time implementation of an email screen 1070 that may be accessed by the agent 1120. The e-mail screen 1070 includes an electronic message header area 1160 that displays information about the source, time, and subject matter of the electronic message. An electronic message text area 1162 displays the problem description contained in the electronic message. Upon acceptance of the electronic message, the classifier 1060 processes the electronic message to generate recommended solutions. In one implementation, the number of solutions recommended by the classifier 1160 may be displayed as an electronic link 1166. Selecting the electronic link 1166 triggers navigation to the solution search display 1105 shown in Fig. 14 and described below. After having selected suitable solutions on the solution search display 1105, the selected solutions appear on the email screen 1070 in an attachments area 1164. The objects in the attachments area 1164 of display 1070 are sent out as attachments to the email response to the customer.

Fig. 14 illustrates an example of the solution search display 1105 that also may be used by expert 1110 and agent 1120 to respond to electronic messages. In one implementation, recommended solutions 1170 from the classifier 1060 may be displayed in a search result area 1080.

For situations in which the recommended solutions 1170 do not adequately match the problem description from the incoming message, the solution search display 1105 includes a manual search interface 1090. With reference to Fig. 11, the manual search interface 1090 may be used to compose and execute queries to manually retrieve solutions 1171 (i.e., class-centers) from the knowledge base 1010.

The solution search display 1105 also provides a class-score 1172 to indicate the text-mining similarity of the recommended solutions 1170 to the incoming message. In addition, the solution display 1105 also may provide drilldown capabilities whereby selecting a recommended solution in the search result area 1080 causes the detailed problem descriptions and the solutions stored in the knowledge base 1010 and identified by the classifier 1060 to be displayed.

A solution cart component 1100 of solution search display 1105 may be used to collect and store new class-equivalents candidates into the collected examples repository 1020, and to cause selected solutions to appear on the e-mail screen 1070 in the attachment area 1164 (Fig. 13). One or more recommendations identified in the search result

area 1080 may be selected for inclusion in the solution cart component 1100. In one implementation, class-equivalents may be stored in explicit form by posing questions to expert 1110. In other implementations, class-equivalents may be stored in an implicit form by observing selected actions by expert 1110. Selected actions may include responding to customers by e-mail, facsimile (fax), or web-chat. The system may support either implicit, explicit, or both, methods of feedback.

Referring back to Fig. 11, the classifier 1060 provides case-based reasoning. The classifier 1060 may use the k-nearest-neighbor technique to match a problem description contained in an electronic message with the valuable examples stored in the form of a text-mining index 1050. The classifier 1060 may use a text-mining engine to transform the problem description into a vector, which may be compared to all other vectors stored in text-mining index 1050. The components of the vector may correspond to concepts or terms that appear in the problem description of the electronic message and may be referred to as features.

The classifier 1060 may calculate the distance between the vector representing the customer problem and each vector stored in text-mining index 1050. The distance between the vector representing the customer problem description and vectors stored in text-mining index 1050 may be indicative of the similarity or lack of similarity between problems. The k vectors stored in text-mining index 1050 (i.e. class-centers and class-equivalents) with the highest similarity value may be considered the k-nearest-neighbors and may be used to calculate an overall classification accuracy as well as a scored list of potential classes matching a particular problem description.

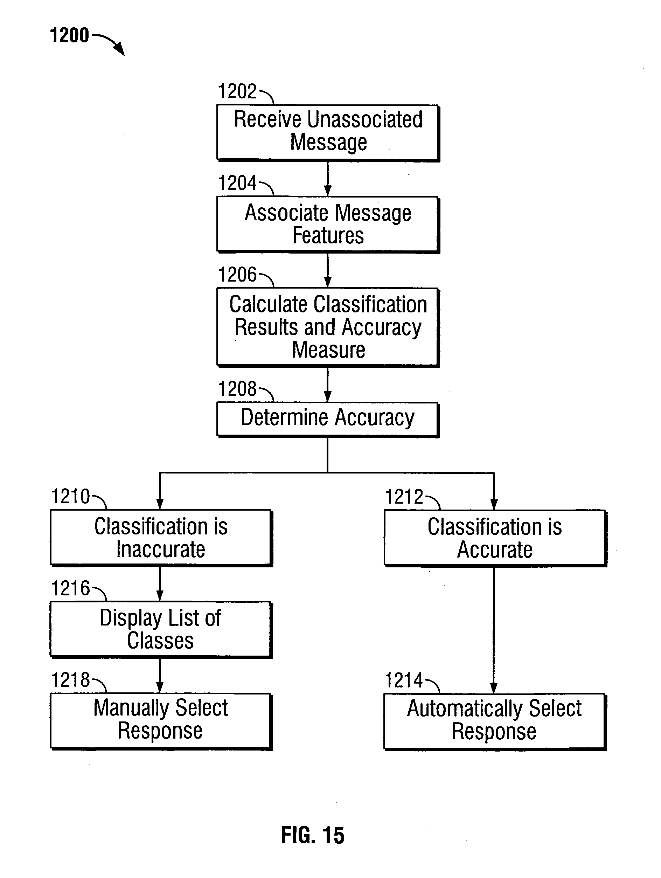

Use of the k-nearest neighbor algorithm to perform example-based classification is illustrated using flow chart 1200 in Fig. 15. The flow chart 1200 describes the steps performed by the classifier 1060. The steps begin when an electronic message is received 1202 that is not associated with a class. A class is an association of documents that share one or more features. The message may include one or more problem descriptions.

The classifier 1060 transforms the message into a vector of features 1204 and may calculate a classification result 1206 that includes a list of candidate classes with a class-weight and a class-score for each candidate class, as well as an accuracy measure for the classification given by this weighted list of candidate classes.

For each neighbor $d_i$ (where $i = 1,...,k$), the text-mining search engine yields the class $c_1$, to which the neighbor is assigned, and a text-mining score $s_1$, which is a measure of the similarity between the neighbor and the unassociated message. Within the $k$-nearest-neighbors of the unassociated message, only $\kappa < k$ distinct candidate classes $\gamma_j$ (where $j = 1,...,\kappa$) are present.

Based on the above information of the $k$-nearest-neighbors, the classifier 1060 may calculate the classification result. In one implementation, the classification result may include a class-weight and a class-score.

The class-weight $w_j$ may measure the probability that a candidate class $\gamma_j$ identified in text-mining index 1050 is the correct class for classification. In one implementation, class-weights may be calculated using the following formula:

Class-weights proportional to text-mining scores for $j$ in the set of $1,...,\kappa$:

$$w_j = \sum_{c_i = c_j} s_i \bigg/ \sum s_i \qquad \text{(summed over } i = 1,\ldots,k \text{)}$$

In other implementations, class-weights also may be calculated using text-mining ranks from the text-mining search assuming the nearest-neighbors $d_i$ are sorted descending in text-mining score. Class-weights using text-mining ranks may be calculated using the following formula:

Class-weights proportional to text-mining ranks for $j$ in the set of $1,...,\kappa$:

$$w_j = \sum_{c_i = c_j} (k+1-i) \bigg/ \sum (k+1-i) \approx 2 \sum_{c_i = c_j} \frac{k+1-i}{k(k+1)} \qquad \text{(summed over } i = 1,\ldots,k \text{)}$$

The classifier 1060 also may calculate an accuracy measure $\sigma$ that may be normalized (i.e. $0 \leq \sigma \leq 1$) and that signifies the reliability of the classification.

Class-weights also may relay information regarding how candidate classes $\gamma_j$ are distributed across the nearest-neighbors and may be used as a basis to calculate an accuracy measure. For example, normalized entropy may be used in combination with definitions of class-weights using the following formula for classification accuracy:

$$\sigma^{(n)} = 1 - S/S_{\mathrm{max}} = 1 + \sum_{j=1}^{\kappa} w_j \log_n w_j \, ,$$

where $n = k$ for a global accuracy measure; and $n = \kappa$ for local accuracy measure.

The global accuracy measure may take into account all classes, while the local accuracy measure may only account for classes present in the $k$-nearest-neighbors.

The classifier 1060 may also calculate class-scores which may be displayed to expert 1110 and agent 1120 to further facilitate understanding regarding candidate classes and their relatedness to the unassociated message. In contrast to the normalized class-weights, class-scores need not sum to one if summed over all candidate classes.

For example, if the focus of the user is on classification reliability, the classifier 1060 may set the class-score equal to class-weights. Alternatively, if the focus of the user is on text-mining similarity between candidate classes and the unassociated message, the classifier 1060 may allow the class-score to deviate from the class-weights. In one implementation, the class-score $t_j$ may be calculated as an arithmetic average of the text-mining scores per class using the following formula (for each $j$ in the set of $1,...,\kappa$):

$$t_j = \sum_{c_i = c_j} s_i \left/ \sum_{c_i = c_j} 1 \right. \qquad (\text{summed over } i = 1,...,k)$$

In another implementation, class-score may be calculated as the weighted average of the text-mining scores per class using the following formula (for each $j$ in the set of $1,...,\kappa$):

$$t_j = \sum_{c_i = c_j} (s_i)^2 \left/ \sum_{c_i = c_j} s_i \right. \qquad (\text{summed over } i = 1,...,k)$$

In other implementations, class-score may be calculated as a maximum of text-mining scores per class using the following formula (for each $j$ in the set of $1,...,\kappa$):

$$t_j = \max_{c_i = c_j} (s_i) \qquad (\text{evaluated over } i = 1,...,k)$$

The class-score calculated by the arithmetic average may underestimate the similarity between the class and the unassociated message if the variance of the text-mining scores in the class is large. In contrast, the class-score calculated as a maximum text-mining score per class may overestimate the similarity. The class-score calculated as the weighted average may be a value between these extremes. Although three class-score calculations have been disclosed, classifier 1060 may support additional or different class-score calculations.

The classifier 1060 may determine if the classification is accurate at 1208 based upon the calculated accuracy measure. If the classification is accurate at 1212, the classifier 1060 automatically selects at 1214 a response that incorporates a solution description. If the classification is inaccurate at 1210, based upon the accuracy measure value, the classifier 1060 displays at 1216 a list of class-centers and class-equivalents. This allows the expert 1110 or agent 1120 to manually select at 1218 a response including a solution description from the classes displayed.

**Other Examples**

The above-described content analysis can provide generic classification services. In one implementation, for example, the system may serve as a routing system or expert finder without modification. The system may classify problem descriptions according to the types of problems agents have previously solved so that customer messages may be automatically routed to the most competent agent. The recommendation also may be a list of identifiers, each of which corresponds to a respective group of one or more suggested persons or entities knowledgeable about subject matter in the problem description.

The system, however, is not limited to incoming problem descriptions. In one implementation, the system may be used in a sales scenario. For example, the system may classify an incoming customer message containing product criteria with product descriptions in a product catalog or with other examples of customer descriptions of products to facilitate a sale.

With respect to business objects of the type "expert," the "stored" information may be within the knowledge of a human expert who may be referred to in responding to an incoming message. Typically, an expert has more capability to address certain categories of incoming messages than a general call center agent. "Experts" (also referred to as business partners) may refer to one or more individuals who may be employees or contractors, and who may be onsite or off-site relative to the physical enterprise computing system. Accordingly, references in this document to an expert business object refer to identifying information, such as contact information, stored in the enterprise computing system. As such, a stored expert-type business object may provide a name, phone number, address, email address, website address, hyperlink, or other known methods for communicating with an expert who is linked to a selected category.

Although the examples discussed in this document have focused primarily on business processes that handle inbound and outbound information in the form of email, the coherent categorization schemes and content analysis may be used with other forms and combinations of inbound and outbound textual information. Such forms may include, for example, internet-based chat, data transmitted over a network, voice over telephone, voice over internet protocol (VoIP), facsimile, and communications for the visually and/or hearing-impaired (e.g., TTY), and the like. Furthermore, received information may be in one form while response information may be in a different form, and either may be in a combination of forms. In addition, inbound and outbound information may incorporate data that represents text, graphics, video, audio, and other forms of data. The interaction may or may not be performed in real time.

Various features of the system may be implemented in hardware, software, or a combination of hardware and software. For example, some features of the system may be implemented in computer programs executing on programmable computers. Each program may be implemented in a high level procedural or object-oriented programming language to communicate with a computer system or other machine. Furthermore, each such computer program may be stored on a storage medium such as read-only-memory (ROM) readable by a general or special purpose programmable computer or processor, for configuring and operating the computer to perform the functions described above.

The invention can be implemented with digital electronic circuitry, or with computer hardware, firmware, software, or in combinations of them. Apparatus of the invention can be implemented in a computer program product tangibly embodied in a machine-readable storage device for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. The essential elements of a computer are a processor for executing instructions and a memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

Other examples are within the scope of the following claims.

**Claims**

1. A method of analyzing the content of an incoming electronic message (IEM), the method comprising:

classifying the IEM using query-based classification to select at least one category that relates to the content of the IEM; and

classifying the IEM using an example-based classification algorithm to search through a set of stored previous electronic messages, each stored previous electronic message being associated with at least one of the selected categories, to identify at least one stored previous electronic message that relates to the content of the IEM.

2.  The method of claim 1, further comprising identifying at least one business object that is associated with the selected category.

3.  The method of claim 2, further comprising recommending the identified at least one business object.

4.  The method of one of the preceding claims, further comprising identifying at least one business object that is associated with the identified stored previous electronic message.

5.  The method of claim 4, further comprising recommending the identified at least one business object.

6.  The method of one of the preceding claims, wherein classifying the IEM using query-based classification comprises:

    evaluating content of the IEM using pre-defined queries associated with each of a plurality of pre-defined categories in a categorization scheme; and
    selecting a category for which one of the pre-defined queries evaluates as true.

7.  The method of one of the preceding claims, wherein classifying the IEM using an example-based classification algorithm comprises:

    comparing the IEM with the set of stored previous electronic messages; and
    determining which stored previous electronic messages in the set of stored previous electronic messages are most similar to the IEM.

8.  The method of one of the preceding claims, further comprising:

    identifying at least one business object that is associated with the selected category; and
    identifying at least one business object that is associated with the identified stored previous electronic message.

9.  The method of claim 8, further comprising recommending business objects that are associated with the selected category and/or the identified stored previous electronic message.

10. The method of one of the preceding claims, wherein the IEM is an e-mail.

11. The method of one of the preceding claims, wherein the IEM is received via Internet self-service.

12. The method of one of the preceding claims, further comprising the step of providing a recommendation based on both the selected category and the identified at least one stored previous electronic message.

13. The method of one of the preceding claims, wherein the example-based classification algorithm is a k-nearest neighbor algorithm or a support vector machine algorithm.

14. A computer program product tangibly embodied in an information carrier, the computer program product containing instructions that, when executed, cause a processor to perform operations to analyze the content of an incoming electronic message (IEM), the operations comprising:

    classify the incoming message using query-based classification to select at least one category that relates to the content of the IEM; and
    classify the IEM using an example-based classification algorithm to search through a set of stored previous electronic messages, each stored previous electronic message being associated with at least one of the selected categories, to identify at least one stored previous electronic message that relates to the content of the IEM.

**15.** A system for responding to incoming electronic messages (IEM), the system comprising:

a content analysis engine that uses query-based classification to select at least one category that relates to the content of the IEM, and uses an example-based classification algorithm to search through a set of stored previous electronic messages, each stored previous electronic message being associated with at least one of the selected categories, to identify at least one stored previous electronic message that relates to the content of the IEM.

**FIG. 1**

32

e.g. Customer
Question

**Content Analysis** 37

Incoming
Email 34

Query-Based

38

Example-Based 39

Object IDs

40

42

**Business Objects** 44

Experts 46

Quick
Solutions 48

Response
Templates 50

Routing
Interaction Record Categorization
Quick Solutions
Auto Response

Email Editor 52

Response
Email 36

**FIG. 2A**

**FIG. 2B**

FIG. 3

Business Process Steps — 100
Interaction Record — 120

Categorization Schemes — 105
ERMS — 125
Interaction Reason — 135 / 130
Product — 140 / 150 / 145

Categories — 110
LEGO Land — 155 / 160
LEGO Club — 165 / 170
LEGO Products — 175 / 180
Events — 195 / 200
Entry Fee — 190 / 185
Driving Directions — 205 / 210
Building Instructions — 215 / 220
Product Group A
Product Group B
225 / 235 / 245

Business Objects — 115
Experts — 46
Quick Solutions — 48
Response Templates — 50
230 / 240 / 250

FIG. 4

500 ⟍

510 ⟍ ( Start )

512 ⟍
Retrieve Content to-be-
Classified

514 ⟍
Retrieve All Categorization
Schemes that are to be
Evaluated

516 ⟍
Select First Categorization
Scheme for Evaluation

518 ⟍
Set Top-Level Categories as
Current Set of Categories

520 ⟍
Select First Category in
Current Set of Categories

522 ⟍
Evaluate Content Queries
of Category

524 ⟍
Content Queries
Match
?
No → 532 ⟍
Select Next Category in
Current Set of Categories

Yes

526 ⟍
Add Matching Categories
to Result List

534 ⟍
Add Result List for Current
Categorization Scheme to
Query-Based Classification
Result

528 ⟍
Set Next Lower-Level
Categories as Current Set
of Categories

536 ⟍
Select Next Categorization
Scheme for Evaluation

530 ⟍
Invoke Evaluation

538 ⟍
Return Query-Based
Classification Result

540 ⟍
( End )

FIG. 5

26

EP 1 587 004 A1

**600**

610
Incoming
Email

614
Content
Analysis

615
Suggested
Category

616
Categorize

618
Categorization
Scheme
Repository

620
Selected
Category

622
Categorization
Scheme
Objects API

624
**Linked Business Objects**

46
Experts

48
Quick
Solutions

50
Response
Templates

628
Other
Viewsets

626
Email
Editor

630
"End
Contact"

632
1-Order
Repository

612
Response

**FIG. 6**

700

EP 1 587 004 A1

SAP

| Bill Frissel | | Mail Outbound | b.frissel@martin.net |
| Martin Co. Ltd. | | Connected | 0:05 / 0:15  Ready |

☒ ▯Accept▯ ▯Reject▯  ▯Transfer▯ ▯End▯  ▯Dial Pad▯    ⟋710    ○ Ready ○ Wrap Up ⊙ Not Ready ▯▼▯

◄ ► **E-Mail**                                                              ▯▼▯

| **E-Mail** | | **E-Mail Header** | |
| Subject: | Re: Directions to LEGOLAND | From: | pj.castillo@lego.com |
| Text type / Language: | HTML ▯▼▯English ▯▼▯ | Reply To: | service@lego.com ▯▼▯ |
| Insert Standard Response: | ▯▼▯▯Go▯ | To: | b.frissel@martin.net ▯ |

Identify Account
Interaction Record
Cases
Sales Order
Service Order
Knowledge Search
Campaigns

▯▯ ▯▯ ▯X▯ ▯▯▯ ▯▯ ▯▯▯ ▯Arial ▯▼▯ 7 (36 pt)▯▼▯

**E-Mail**
Chat
Index
Scripts

▯B▯▯I▯▯U▯ ▯▯▯ ▯▯▯▯▯▯ ▯▯▯ ▯▯▯ ▯▯

| Cc: | |
| Bcc: | |
| Date/Time: | |

Universal Inbox
Interaction History

>Hi,
>Please send me the directions to LEGOLAND California.
>Thx, Bill Frissel

_712_

**Attachments**

| Document Title | Type |
| | |
| | |
| | |

▯▯▯▯▯▯▯▯ 1/1

▯ ▯Add▯ ▯Delete▯

**Interaction Log**

Interaction Record

| Reason: | Directions ▯▼▯ |
| Priority: | Medium ▯▼▯ |
| Description: | Directions to LEGOLAND |
| Status/Result: | ▯▼▯ ▯▼▯ |

▯Send▯ ▯Save▯ ▯Print▯ ▯Delete▯

714
716
718

**FIG. 7A**

700 ⟍

FIG. 7B

700

EP 1 587 004 A1

SAP

| Bill Frissel | | Mail Outbound | b.frissel@martin.net |
| Martin Co. Ltd. | | Connected | 0:05 / 0:15  Ready |

⊠  | Accept |  | Reject |   | Transfer |  | End |   | Dial Pad |    ⟋710        ○ Ready ○ Wrap Up ◉ | Not Ready |▼|

◀ ▶ | E-Mail                                                                |▼|

**E-Mail**

Identify Account
Interaction Record
Cases
Sales Order
Service Order
Knowledge Search
Campaigns
**E-Mail**
Chat
Index
Scripts
Universal Inbox
Interaction History

**E-Mail**

Subject:    730    | Re: Direction to LEGOLAND
Text type / Language:    | HTML    |▼| | English    |▼|
Insert Standard Response: | Directions - LEGOLAND California    |▼| | Go |

| Arial    |▼| | 7 (36 pt) |▼|

B I U  ⎵ ⎵  ▤▤▤▤  ⋮≡⋮≡  ⋲≡⋲≡

LEGO

Hi Bill,
Here are the directions:      712
LEGOLAND® California is located in the seaside village of Carlsbad, just 30 minutes north of San Diego and one hour south of Anaheim.

From North San Diego County:
Take Coastal 5 South to Cannon Road East, and follow signs to LEGOLAND

From North San Diego County Inland:
Take 15 North or South to 78 West to 5 South, then take Cannon Road East and follow signs to LEGOLAND

From North San Diego South Bay Area:
Take 5 South to Cannon Road East, and follow signs to LEGOLAND

From East San Diego County, Hotel Circle:
Take 8 West to 5 North to Cannon Road East, then follow signs to LEGOLAND

| Send |  | Save |   | Print |  | Delete |

**E-Mail Header**

From:    | pj.castillo@lego.com
Reply To:   | service@lego.com    |▼|
To:    | b.frissel@martin.net    |⊡|
Cc:    |⊡|
Bcc:    |⊡|
Date/Time:

**Attachments**

| Document Title | Type |
|---|---|
|  |  |
|  |  |

⊠▤▼▤    1/1

⊡  | Add |  | Delete |

**Interaction Log**

Interaction Record

Reason:    | Directions    |▼|
Priority:    | Medium    |▼|
Description:   | Directions to LEGOLAND
Status/Result:   |  |▼|   |▼|

**FIG. 7C**

700

EP 1 587 004 A1

SAP

| | Bill Frissel | | Mail Outbound | b.frissel@martin.net |
| | Martin Co. Ltd. | | Connected | 0:05 / 0:15  Ready |

☒ ‖ Accept ‖ ‖ Reject ‖ ‖ Transfer ‖ ‖ End ‖ ‖ Dial Pad ‖ ⟍710    ○ Ready ○ Wrap Up ⊙ Not Ready ▾

◄ ► E-Mail ▾

Identify Account
Interaction Record
Cases
Sales Order
Service Order
Knowledge Search
Campaigns
**E-Mail**
Chat
Index
Scripts
*Universal Inbox*
*Interaction History*

**E-Mail**

Subject: Re: Lego exclusive sets catalog request

Text type / Language: HTML ▾ English ▾

Insert Standard Response: ▾ ‖ Go

[toolbar icons] 6pt ▾ ▲

B *I* U ▢ ▢ ▤▤ ▲

730

| Membership |
| Catalog Request |
| Subscription Enquiry |
| Publication request |
| Event list |
| Greeting |
| Order Status |
| **More Responses..** |

> Hi,
> Please send me the prod
> Lego sets.
> Thx, Bill Frissel

712

Send ‖ Save ‖ Print ‖ Delete

**E-Mail Header**

From: pj.castillo@lego.com
Reply To: service@lego.com ▾
To: b.frissel@martin.net ▢
Cc: ▢
Bcc: ▢
Date/Time:

**Attachments**

| Document Title | | Type |
| --- | --- | --- |
| | | |
| | | |

⊠▐◄▐►▐⊠ 1/1

▢ ‖ Add ‖ Delete

**Interaction Log** ⟋718

Interaction Record

Reason: ▾
Priority: ▾
Description:
Status/Result: ▾ ▾

**FIG. 8A**

**SAP**

| Bill Frissel<br>Martin Co. Ltd. | | Mail Outbound<br>Connected | b.frissel@martin.net<br>0:05 / 0:15    Ready |

☒ | Accept | Reject | Transfer | End | Dial Pad |     ○ Ready ○ Wrap Up ⊙ Not Ready

◄ ► **E-Mail**    ⟨▾⟩    ⌐810

**More Responses - Search**

Show me standard responses with    ⌐812

Interaction Reason: [_____] 🗗

With this title: [_____]

Language: [_____] ▾

| Search | Clear |

**Results**

| | Title | Category | Created On | Created By |
|---|---|---|---|---|
| ☐ | | | | |
| ☐ | | | | |
| ☐ | | | | |
| ☐ | | | | |
| ☐ | | | | |
| ☐ | | | | |
| ☐ | | | | |

[⟱][⟰][⟱][⟱]

| Insert | Add to favorites | Cancel |

**Identify Account**
**Interaction Record**
**Cases**
**Sales Order**
**Service Order**
**Knowledge Search**
**Campaigns**
**E-Mail**
**Chat**
**Index**
**Scripts**
**Universal Inbox**
**Interaction History**

**FIG. 8B**

EP 1 587 004 A1

700

EP 1 587 004 A1

SAP

| | Bill Frissel<br>Martin Co. Ltd. | | Mail Outbound<br>Connected | b.frissel@martin.net<br>0:05 / 0:15    Ready |

| Accept | Reject | Transfer | End | Dial Pad | ○ Ready ○ Wrap Up ◉ Not Ready |

◀ ▶ **E-Mail** ▼

Identify Account
Interaction Record
Cases
Sales Order
Service Order
Knowledge Search
Campaigns
**E-Mail**
Chat
Index
Scripts
Universal Inbox
Interaction History

**More Responses - Search**

Show me standard responses with

Interaction Reason:

With this title:

Language:

Search | Clear

**Results** 170

| Title |
| --- |
| 160 |
| 210 |
| 190 |
| 200 |
| 180 |

Insert | Add to favorites | Cancel

**Value Help Selection**

**Search Criteria**

Interaction Reason:

Language:

Search | Clear | Close

**Search Criteria**

| | | |
| --- | --- | --- |
| ☐ ▷ | LEGO Club | Refers to the exclusive.. |
| ☐ ▽ | LEGO Land | Enquires regarding the .. |
| ☐ | ○ Driving Directions | Enquiries requesting.. |
| ☐ | ○ Entry Fee | Requests to clarify entry.. |
| ☐ | ○ Events | Requests to know current.. |
| ☐ ▷ | LEGO Products | Category enumerating the.. |

**Created By**

**FIG. 8C**

**FIG. 8D**

EP 1 587 004 A1

700

SAP

| Bill Frissel<br>Martin Co. Ltd. | | Mail Outbound<br>Connected | b.frissel@martin.net<br>0:05 / 0:15      Ready |

⊠  ‖ Accept ‖  ‖ Reject ‖  ‖ Transfer ‖‖ End ‖  ‖ Dial Pad ‖      ○ Ready ○ Wrap Up ⊙ Not Ready ‖▼‖

◄ ► **E-Mail**                                                                ‖▼‖        ⌐830

Identify Account
Interaction Record
Cases
Sales Order
Service Order
Knowledge Search
Campaigns
**E-Mail**
Chat
Index
Scripts
Universal Inbox
Interaction History

**Standard Response - Detail**

| Title: | Directions LEGOLAND California |
| Category: | Directions |
| Created by: | Chavez |
| Created on: | 09.25.2003 |

Preview:

LEGO

Hi Bill,
Here are the directions:
LEGOLAND® California is located in the seaside village of Carlsbad, just 30 minutes north of San Diego and one hour south of Anaheim.
From North San Diego County:
Take Coastal 5 South to Cannon Road East, and follow signs to LEGOLAND
From North San Diego County Inland:
Take 15 North or South to 78 West to 5 South, then take Cannon Road East and follow signs to LEGOLAND
From North San Diego South Bay Area:
Take 5 South to Cannon Road East, and follow signs to LEGOLAND
From East San Diego County, Hotel Circle:
Take 8 West to 5 North to Cannon Road East, then follow signs to LEGOLAND

Thanks and best regards,
P. J. Costello
Customer Service Representative

832⟋   ‖ Insert ‖ ‖ Cancel ‖

**FIG. 8E**

700

**FIG. 8F**

Screen 700:

SAP

| Bill Frissel | | Mail Outbound | b.frissel@martin.net |
| Martin Co. Ltd. | | Connected | 0:05 / 0:15 Ready |

Accept | Reject | Transfer | End | Dial Pad ——710 | ○ Ready ○ Wrap Up ⊙ Not Ready

◄ ► E-Mail

Navigation:
Identify Account
Interaction Record
Cases
Sales Order
Service Order
Knowledge Search
Campaigns
**E-Mail**
Chat
Index
Scripts
Universal Inbox
Interaction History

E-Mail
Subject: Re: Directions to LEGOLAND
Text type / Language: HTML English
Insert Standard Response: Directions - LEGOLAND California Go

Toolbar: Arial 7 (36pt)
B I U 840

Hi Bill,
Here are the directions:
LEGOLAND® California is located in the seaside village of Carlsbad, just 30 minutes north of San Diego and one hour south of Anaheim.
From North San Diego County:
Take Coastal 5 South to Cannon Road East, and follow signs to LEGOLAND
From North San Diego County Inland:
Take 15 North or South to 78 West to 5 South, then take Cannon Road East and follow signs to LEGOLAND
From North San Diego South Bay Area:
Take 5 South to Cannon Road East, and follow signs to LEGOLAND
From East San Diego County, Hotel Circle:
Take 8 West to 5 North to Cannon Road East, then follow signs to LEGOLAND

Send | Save | Print | Delete

E-Mail Header
From: pj.castillo@lego.com
Reply To: service@lego.com
To: b.frissel@martin.net
Cc:
Bcc:
Date/Time:

Attachments
| Document Title | Type |
| | |
1/1
Add | Delete

Interaction Log ——718
Interaction Record
Reason: Directions
Priority: Medium
Description: Directions to LEGOLAND
Status/Result:

FIG. 9A

700 ⟍

FIG. 9B

700 ~►

| SAP |

Bill Frissel
Martin Co. Ltd.  930

2 Automatically Proposed Solutions Available

Mail Outbound          b.frissel@martin.net
Connected          0:05 / 0:15          Ready

✉  | Accept | Reject | Transfer | Hold | Unhold | Hang Up | Dial | Transfer | End |   Dial Pad |          ○ Ready ○ Wrap Up ⊙ | Not Ready ▾

◄ ►  **Knowledge Search**  ─932  ▾  ─934

**Search Criteria**  | **Search Results** |

Text Search | Attribute Search

| Database: | ▾ | Language: | ▾ |

Search Terms:          | Paste | Import from Scratch Pad |

Kirikori nui building instructions  ▲

| Search Results | |
| Title | Relevancy |
| ☐ Kirikori Nui step-by-step building instructions | 100% |
| ☐ Kirikori Nui product description | 85% |

Exact Phrase: [                    ]

Exclude Terms: [                    ]

| 🖾 ▲ ▾ 🖾 | 1/1 |

| Search | Clear |          | Add to Cart | Show Suggestions | Hide Suggestions |

**Search Refinement**  | **Cart**  ─936 |

| Title | Feedback | Status |
| ☑ Kirikori Nui step-by-step building ins.. | Successful ▾ | |

| 🖾 ▲ ▾ 🖾 | 1/1 |

| Refine | Find Related |          | Email | Chart | Export to Case | Remove |

Sidebar menu:
Identify Account
Interaction Record
Cases
Sales Order
Service Order
Knowledge Search
Campaigns

**E-Mail**
Chat
Index
Scripts

Universal Inbox
Interaction History

**FIG. 9C**

EP 1 587 004 A1

700

EP 1 587 004 A1

**Bill Frissel**
**Martin Co. Ltd.**

Mail Outbound | b.frissel@martin.net
Connected | 0:05 / 0:15 | Ready

| Accept | Reject | | Transfer | End | | Dial Pad | 710

○ Ready  ○ Wrap Up  ⊙ Not Ready

◄ ► E-Mail

Identify Account
Interaction Record
Cases
Sales Order
Service Order
Knowledge Search
Campaigns

**E-Mail**
Chat
Index
Scripts

Universal Inbox
Interaction History

**E-Mail**

Subject: 730 | Re: KRIKORI NUI building instructions
Text type / Language: | HTML | English
Insert Standard Response: | building instructions request | Go

Arial | 7 (36pt)

B I U

Mr. Frissel,

The building instructions you requested are attached.
Have fun building with LEGO!

Kind Regards, 940
PJ Castillo
Customer Service Representative

>Hi,
>Please send me the product catalogue for the exclusive
>Lego sets.

>Thx, Bill Frissel 912

| Send | Save | Print | Delete |

**E-Mail Header**

From: | pj.castillo@lego.com
Reply To: | service@lego.com
To: | b.frissel@martin.net
Cc:
Bcc:
Date/Time:

**Attachments** 942

| Document Title | Type |
|---|---|
| LEGO Krikori Nui building instructions | |

1/1

| Add | Delete |

**Interaction Log** 718

Interaction Record

Reason: | Building Instructions-KRIKORI NUI
Priority: | Medium
Description: | KRIKORI NUI building instructions
Status/Result:

**FIG. 9D**

1000

**ERMS**

User Administration • Standard Responses • **Categories** • Repository • Templates • <u>Rules</u>

**Categories**

Show: | My favorites |▼|    Get: | |▼|    | |    | Go |    | Open Advanced Search |

1001

|≋|| Save || Create Sub node || Change || Cut || Copy || Paste || Delete || Print || Add to Favorites |    <u>Help</u>

| Name | Description |
|---|---|
| ☐ ▽ Categories | Root |
| ☐ ▽ Interaction Reason | The reason for Customer Contacting LEGO |
| ☐ ▷ LEGO Club | Refers to the exclusive Lego club; Category to address member questions & concerns |
| ☐ ▽ LEGO Land  ⌐210 | Enquires regarding the Lego Land |
| ☐   ○ Driving Directions | Enquiries requesting driving directions |
| ☐   ○ Entry Fee | Requests to clarify entry fee |
| ☐   ○ Events | Request to know current events at Lego Land |
| ☐ ▷ LEGO Products | Category enumerating the wide range of Lego products |
| ☐ ▷ LEGO Org Chart | The organizational Chart of LEGO |

|▣||▣||▣||▣|    ⌐1003    1/5

1002

| Details | Query | Example Documents | Standard Responses | Knowledge Entities |

1005  |≋|| Add Entry || Delete Entry |  ⌐1007    ⌐1008    ⌐1009    ⌐1012

1004
1006

| Match | Attribute | Operator | Value | Case |
|---|---|---|---|---|
| ☐ If | Subject and Body |▼| | contains |▼| | driving, directions | ☐ |
| ☐ Or |▼| | Subject |▼| | contains |▼| | Lego Land | ☐ |

|▣||▣||▣||▣|    1/1

1011

**FIG. 10**

**Intelligent Classification System**

FIG. 11

EP 1 587 004 A1

# Maintainer User Interface

**ICS Maintenance**

1131 — 1148 — Show: | Favorite Search | ▣ | Go |   Find: | State | ▣ |   | New | ▣ | Go |   FAQ

| Select | Create | Save | Delete | ▶ |   Page of

| #E qus. | Prob. No. | Title | ⎯1152 | Problem Description |

⎯1144

List of Problems from Knowledge Base ⎯⎯⎯ 1132
(Class Centers)

1135 — **Problem** | **Solution**

Problem Description: ⎯1134

Description of Selected Problem ⎯1136
(Editable)

1140 — **Equivalents**   ⎯1150  ⎯1146  ⎯1156

| Select | Create | Save | Reassign | Delete | ▶ |

| State | First Line | ⎯1154 | 1138 |

| Valuable ▼ |

Valuable ▼

List of Examples from Repository ⎯⎯⎯
(Class Equivalent)

1158 — **Equivalent**

Equivalent Description: ⎯1142

Description of Selected Equivalent
(Editable)

**FIG. 12**

EP 1 587 004 A1

EP 1 587 004 A1

1070

1166

**E-Mail Screen**

1162

| E-mail |
|---|
| Hello,<br><br>I am trying to repair a washing machine - Model # ZYZ6869 at QuickKleen Laundramats.<br><br>I want technical schematics for replacing a blower motor (HU3938). Could you please send me the appropriate diagrams as soon as possible?<br><br>My Servicing code is 7979-646<br><br>Regards,<br>Jeff Goldberg |

1160

2. Suggestions Found

**E-Mail Header**

| From: | Jeff Goldberg (Jeff@QuickKleen.com) |
|---|---|
| To: | |
| Cc: | Service Department, ITP |
| Bcc: | |
| Date/Time: | May 07, 2001  03:45 p.m. |
| Subject: | Technical schematics |

**Attachments**

| Type | Document title | Remove |
|---|---|---|
| | | |
| | | |
| | | |
| | | |
| | | |
| | | |
| | | |
| | | |
| | | |
| | | |

1164

**FIG. 13**

**Solution Search Display**

FIG. 14

**1200**

1202 — Receive Unassociated Message

1204 — Associate Message Features

1206 — Calculate Classification Results and Accuracy Measure

1208 — Determine Accuracy

1210 — Classification is Inaccurate

1212 — Classification is Accurate

1216 — Display List of Classes

1218 — Manually Select Response

1214 — Automatically Select Response

**FIG. 15**

**European Patent Office**

**EUROPEAN SEARCH REPORT**

Application Number

EP 05 00 7058

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SEBASTANI F: "Machine Learning in Automated Text Categorization" ACM COMPUTING SURVEYS, ACM, NEW YORK, US, US, vol. 34, no. 1, March 2002 (2002-03), pages 1-47, XP002280034 ISSN: 0360-0300 * page 28, column 1, line 25 - page 31, column 2, line 32 * * page 8, column 1, line 1 - page 9, column 1, line 32 * * page 1, column 1, line 1 - page 6, column 2, line 14 * ----- | 1-15 | G06F17/30 |
| A | EP 1 199 855 A (AMACIS LIMITED) 24 April 2002 (2002-04-24) * abstract * * column 1, line 1 - column 2, line 49 * * column 13, line 6 - column 13, line 33 * ----- | 1-15 | |
| A | LARKEY L S ET AL ASSOCIATION FOR COMPUTING MACHINERY: "Combining classifiers in text categorization" PROCEEDINGS OF THE 19TH. ANNUAL INTERNATIONAL ACM SIGIR CONFERENCE ON RESEARCH AND DEVELOPMENT IN INFORMATION RETRIEVAL. ZURICH, AUG. 18 - 22, 1996, PROCEEDINGS OF THE ANNUAL INTERNATIONAL ACM SIGIR CONFERENCE ON RESEARCH AND DEVELOPMENT IN INFORMATI, vol. CONF. 19, 18 August 1996 (1996-08-18), pages 289-297, XP002231517 ISBN: 0-89791-792-8 * the whole document * ----- -/-- | 1,12,14, 15 | TECHNICAL FIELDS SEARCHED (Int.Cl.7) G06F |

The present search report has been drawn up for all claims

| Place of search | Date of completion of the search | Examiner |
|---|---|---|
| Munich | 12 July 2005 | Hauck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 00 7058

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | YANG Y ET AL ASSOCIATION FOR COMPUTING MACHINERY: "A RE-EXAMINATION OF TEXT CATEGORIZATION METHODS" PROCEEDINGS OF SIGIR'99. 22ND. INTERNATIONAL CONFERENCE ON RESEARCH AND DEVELOPMENT IN INFORMATION RETRIEVAL. BERKELEY, CA, AUG. ; 1999, ANNUAL INTERNATIONAL ACM-SIGIR CONFERENCE ON RESEARCH AND DEVELOPMENT IN INFORMATION RETRIEVAL, NEW YORK, NY : AC, August 1999 (1999-08), pages 42-49, XP000970711 ISBN: 1-58113-096-1 * page 43, column 2, line 30 - page 45, column 1, line 8 * ----- | 1,6, 13-15 | |

TECHNICAL FIELDS SEARCHED (Int.Cl.7)

The present search report has been drawn up for all claims

| Place of search | Date of completion of the search | Examiner |
|---|---|---|
| Munich | 12 July 2005 | Hauck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 7058

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2005

| Patent document cited in search report | | Publication date | Patent family member(s) | | Publication date |
|---|---|---|---|---|---|
| EP 1199855 | A | 24-04-2002 | US | 6883014 B1 | 19-04-2005 |
| | | | EP | 1199855 A2 | 24-04-2002 |

EPO FORM P0459

For more details about this annex : see Official Journal of the European Patent Office, No. 12/82